(19) **Europäisches Patentamt**

**European Patent Office**

**Office européen des brevets**

(11) **EP 4 432 149 A1**

(12) # EUROPEAN PATENT APPLICATION
published in accordance with Art. 153(4) EPC

(43) Date of publication:
**18.09.2024 Bulletin 2024/38**

(21) Application number: **22913935.7**

(22) Date of filing: **25.11.2022**

(51) International Patent Classification (IPC):
***G06F 21/60*** (2013.01)

(52) Cooperative Patent Classification (CPC):
**G06F 17/18; G06F 21/60**

(86) International application number:
**PCT/CN2022/134250**

(87) International publication number:
**WO 2023/124677 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021 CN 202111681763**

(71) Applicant: **Huawei Technologies Co., Ltd.**
**Shenzhen, Guangdong 518129 (CN)**

(72) Inventor: **WU, Shuang**
**Shenzhen, Guangdong 518129 (CN)**

(74) Representative: **Maiwald GmbH**
**Engineering**
**Elisenhof**
**Elisenstrasse 3**
**80335 München (DE)**

(54) **DATA PROCESSING METHOD AND COMPUTING PLATFORM**

(57) This application provides a data processing method and a computing platform. The method includes: The computing platform obtains data and a computing task description, where the computing task description includes computing that needs to be performed on the data; the computing platform selects a first operator set based on the computing task description, where the first operator set includes a plurality of basic operators; and the computing platform executes, based on a dependency relationship between the basic operators in the first operator set, the first operator set to compute the data, to obtain a computation result of the data, where a placeholder of an input operand of one of two basic operators that have the dependency relationship intersects with a placeholder of an output operand of another basic operator. According to the data processing method provided in this application, decoupling between construction of a computing task based on a higher order operator and execution of the computing task can be implemented, and a computing speed of data processing can be further improved.

**1400**

```
S1410: A computing platform obtains data and a computing task
description, where the computing task description includes computing
that needs to be performed on the data
```

```
S1420: The computing platform selects a first operator set based on the
computing task description, where the first operator set includes a
plurality of basic operators
```

```
S1430: The computing platform executes, based on a dependency
relationship between the basic operators in the first operator set, the
first operator set to compute the data, to obtain a computation result of
the data, where an input operand of one of two basic operators that have
a dependency relationship includes an output operand of the other basic
operator
```

FIG. 14

## Description

This application claims priority to Chinese Patent Application No. 202111681763.3, filed with the China National Intellectual Property Administration on December 30, 2021 and entitled "DATA PROCESSING METHOD AND COMPUTING PLATFORM", which is incorporated herein by reference in its entirety.

## TECHNICAL FIELD

This application relates to the data processing field, and more specifically, to a data processing method and a computing platform.

## BACKGROUND

In an entire life cycle of data, data in storage and data in transmission can be well protected based on traditional cryptography. However, data in use cannot be effectively protected. Data encrypted by using traditional encryption methods cannot be used for computation and needs to be decrypted before being used. In scenarios such as cloud computing, customers' sensitive data cannot be stored and processed by a cloud service provider due to insufficient trust in the cloud service provider. Data on the cloud may be leaked due to internal attacks or security vulnerabilities.

In this case, a cryptographic computing technology provides corresponding solutions. One of the solutions is that the data can be computed in an encrypted state based on cryptography, and an executor of computation does not know what data is computed by the executor, thereby logically isolating plaintext. In all kinds of solutions based on the cryptography, because fully homomorphic encryption depends on mathematical difficulties and has strict security certification, so that security is high. However, a computing speed of fully homomorphic encryption is slow. Therefore, in an actual use process, a parallel acceleration manner or a heterogeneous acceleration manner may be required for acceleration.

However, in an existing algorithm architecture based on homomorphic encryption, when a user of a cryptographic algorithm library invokes a higher order operator in a homomorphic encryption algorithm library to describe a computing task, an interface of a hardware platform directly invokes code of a basic operator in an algebraic algorithm library to implement computation. However, on one hand, the basic operator in the algebraic library is generally compiled based on a specific hardware platform, and cannot support optimization or acceleration of the basic operator on another hardware platform. On the other hand, function invoking logic between the higher order operator in the cryptographic algorithm library and the basic operator in the algebraic library is compiled by a cryptographer. In this case, a cryptography expert needs to fully understand specific code implementation of the basic operator and a feature of the hardware platform when compiling the function invoking logic. Therefore, to implement heterogeneous acceleration of a plurality of hardware platforms based on a current homomorphic encryption algorithm architecture, software and hardware engineers need to recompile specific basic operators based on a new hardware platform, and the cryptography expert needs to understand specific code implementation of the new basic operator and a feature of the new hardware platform.

In addition, due to an invoking logical relationship between the higher order operator and the basic operator in the current homomorphic encryption algorithm architecture, a computing engine cannot learn of an overall computing task, and needs to execute the computing task only based on a function invoking relationship and an operator occurrence sequence. Operators of a same type in a same computing task cannot be combined for execution. This may cause a waste of computing power.

## SUMMARY

This application provides a data processing method and a computing platform. Based on an algorithm architecture that can provide a computing graph that describes an overall computing task, a computing engine can learn of the overall computing task, so that decoupling between construction of a computing task based on a higher order operator and execution of the computing task can be implemented. Further, operators of a same type can be combined for execution, and heterogeneous acceleration of a plurality of hardware platforms can be implemented, and a computing speed of data processing can be further improved.

According to a first aspect, a data processing method is provided. Specifically, the method may include: A computing platform obtains data and a computing task description, where the computing task description includes computing that needs to be performed on the data; the computing platform selects a first operator set based on the computing task description, where the first operator set includes a plurality of basic operators; and the computing platform executes, based on a dependency relationship between the basic operators in the first operator set, the first operator set to compute the data, to obtain a computation result of the data, where a placeholder of an input operand of one of two basic operators that have the dependency relationship intersects with a placeholder of an output operand of another basic operator.

Specifically, the computing platform may include one or more computer devices.

In some possible implementations, all steps in the foregoing method are performed by one computer device.

In some possible implementations, the computing platform includes a plurality of computer devices, and the steps in the foregoing method are performed by the plurality of computer devices. For example, after obtaining the data and the computing task description, the first computer device inputs the computing task description into a second computer device, and inputs the data into a third computer device. After selecting the first operator set, the second computer device inputs the first operator set into the third computer device, and the third computer device executes the first operator set to compute the data. For example, the third computer device may have one or more hardware platforms, and a plurality of basic operators in the first operator set may be executed by one hardware platform, or may be respectively executed by a plurality of hardware platforms. For example, the data obtained by the first computer device and the first operator set selected by the second computer device may also be input into the plurality of computer devices. The plurality of computer devices may have one or more hardware platforms. The foregoing performing the first operator set to compute the data may also be performing the first operator set to compute the data. Specifically, each computer device in the plurality of computer devices may perform a corresponding basic operator by using one hardware platform, or may perform a corresponding basic operator by using a plurality of hardware platforms. This is not specifically limited in this application.

It should be understood that, when the plurality of hardware platforms or the plurality of computer devices simultaneously execute the first operator set, a data processing speed may be increased.

In some possible implementations, the one or more computer devices on the computing platform may be cloud computer devices. For example, all computer devices on the computing platform are cloud computer devices, and all the computer devices are used by a data processing module in the cloud to process ciphertext and/or plaintext data. For example, if the third computer device or the plurality of computer devices that are in the computing platform and that are used to perform computing on the data by using the first operator set are cloud computer devices, the computer devices are used by a data processing module in the cloud to process ciphertext and/or plaintext data.

For example, in some scenarios in which data processing is required, after obtaining the data that needs to be processed and the computing task description, the computing platform performs the foregoing steps to obtain the computation result. In an example, the computing platform may obtain ciphertext electronic medical record data and a computing task description that needs to process the electronic medical record data, and perform the foregoing steps to obtain a computation result. In another example, in federated learning, a plurality of participants may implement joint machine learning modeling while ensuring data privacy of the participants, that is, the computing platform obtains ciphertext data of the participants, and uses the ciphertext data to improve an effect of a model of the participants. It should be understood that the foregoing example is merely an example for description, and an application scenario of the provided data processing method is not specifically limited in this application.

More specifically, a computing engine in the computer device may execute the first operator set to compute the data.

For example, the computing engine performs correlation computation on the data based on the plurality of basic operators in the first operator set and the dependency relationship between the plurality of basic operators. It should be understood that the dependency relationship between the plurality of basic operators in the first operator set is equivalent to the computing task description. The data may be ciphertext data, or may be plaintext data, or may be data mixed with plaintext and ciphertext. This is not specifically limited in this application.

It should be noted that a placeholder of an operand in this application may be one placeholder, or may be a set including a plurality of placeholders. This is not specifically limited in this application.

In some possible implementations, that an operator a has a dependency relationship with an operator b may mean that the operator b can be executed only after the operator a is executed. In other words, an output placeholder of the operator a intersects with an input placeholder of the operator b. It should be noted that the operator a may also be referred to as a dependent operator of the operator b, or the operator b is referred to as a notification operator of the operator a. For example, that a placeholder of an input operand of one of two basic operators that have a dependency relationship intersects with a placeholder of an output operand of the other basic operator may be specifically: An input operand of one operator includes an output operand of the other basic operator; or a part of an output operand of one operator is an input operand of the other operator, that is, the output operand of the operator may be split into a plurality of operands, and the plurality of operands may be separately used as an input operand of the other operator; or an output operand of an operator is a part of an input operand of another operator, that is, an output operand of an operator and an output operand of another operator may be combined into a new operand, and the new operand may be used as an input operand of the another operator; or a part of an output operand of an operator is a part of an input operand of another operator, that is, the output operand of the operator may be split into a plurality of operands, one of the plurality of operands may be combined with another operand into a new operand, and the new operand may be used as an input operand of the another operator.

In the foregoing technical solution, when executing a computing task, the computing platform may learn of an overall computing task by using a computing graph including the first operator set. Further, the computing platform may perform computing based on the computing graph from a basic operator that does not have a dependency operator, until all basic operators in the computing graph are executed, and computing is completed without relying on an upper-layer higher order operator. Therefore, construction of a computing task based on the higher order operator can be decoupled from execution of the computing task. In this way, software and hardware engineers do not need to consider an invoking relationship between a higher order operator and a basic operator when optimizing a basic operator. In addition, because the computing graph represents a dependency relationship between the basic operators of a computing task, and is irrelevant to a specific hardware platform for implementation, cross-hardware platform migration of an algorithm architecture can be implemented, so that heterogeneous acceleration of multiple hardware platforms can be supported, and a computing speed of ciphertext data processing is further improved.

With reference to the first aspect, in some implementations of the first aspect, the method further includes: The computing platform determines a first basic operator in the first operator set based on the dependency relationship between the basic operators in the first operator set, where the first basic operator is a basic operator whose intersection set between an input placeholder and an output placeholder of any basic operator in the first operator set is empty; the computing platform stores the data in storage space corresponding to an input placeholder set of the first basic operator; and the computing platform executes the first basic operator on the data, and executes, based on the dependency relationship between the basic operators in the first operator set, a basic operator in the first operator set other than the first basic operator.

It should be understood that the computing platform may include one or more computer devices.

It should be noted that the input placeholder of the operator represents a union set of placeholders of all input operands of the operator, and the input placeholder set represents a set including input placeholders of a plurality of operators. The output placeholder of the operator represents a union set of placeholders of output operands of the operator, and the output placeholder set represents a set including output placeholders of the plurality of operators.

In some possible implementations, the first basic operator set may include a plurality of first basic operators. In this case, the computing engine determines, based on the input operands of the plurality of first basic operators, storage space corresponding to input placeholders in the input placeholder set to store data.

With reference to the first aspect, in some implementations of the first aspect, the first operator set and the dependency relationship between the basic operators in the first operator set are determined based on N basic operator sets. The N basic operator sets are in a one-to-one correspondence with N higher order operators, and the computing on the data can be implemented by using the N higher order operators. A first basic operator set is obtained by expanding a first higher order operator, the first higher order operator is any higher order operator in the N higher order operators, and the first basic operator set is a basic operator set that is in the N basic operator sets and that corresponds to the first higher order operator. An output placeholder of the first basic operator set is the same as an output placeholder of the first higher order operator.

In some possible implementations, one computing task needs to have descriptions of a plurality of higher order operators, and there is a dependency relationship between the plurality of higher order operators. In this application, each higher order operator is expanded into a corresponding basic operator set in advance based on a customized operator expansion function. In some possible implementations, the foregoing expansion process is "level-by-level expansion". To be specific, the higher order operator is first expanded into a plurality of second order operators, and then the plurality of second order operators are further expanded until the second order operators are expanded into a customized basic operator.

It should be understood that, to ensure that a computing task represented by the expanded operator is the same as a computing task represented by the plurality of higher order operators, an output placeholder of a basic operator set obtained by expanding the higher order operator needs to be consistent with an output placeholder of the higher order operator.

It should be noted that each of the N basic operator sets includes one or more basic operators. In other words, a total quantity of basic operators included in the N basic operator sets is greater than or equal to a total quantity N of higher order operators before expansion.

With reference to the first aspect, in some implementations of the first aspect, the N basic operator sets are in a one-to-one correspondence with N pieces of dependency relationship information, and the N pieces of dependency relationship information indicates a dependency relationship between the basic operators in the corresponding basic operator set. The first operator set and the dependency relationship between the basic operators in the first operator set are obtained in the following manner: determining target dependency relationship information based on the N pieces of dependency relationship information, where the target dependency relationship information indicates a dependency relationship of each basic operator in the plurality of basic operators; and determining the first operator set based on the target dependency relationship information and basic operators included in the N basic operator sets, where the target dependency relationship information is the dependency relationship between the basic operators in the first operator set.

It should be understood that after each higher order operator is expanded into a corresponding basic operator set, there is a dependency relationship between the basic operators in the basic operator set. In some possible implementations, after the N pieces of dependency relationship information corresponding to the N basic operator sets are determined, the dependency relationship between the N basic operator sets is determined based on an input placeholder set and an output placeholder set of each basic operator set in the N basic operator sets. In some possible implementations, the N basic operator sets and the dependency relationship between the N basic operator sets may be further optimized, that is, repeated basic operators or the dependency relationship in the N basic operator sets are combined or removed.

With reference to the first aspect, in some implementations of the first aspect, the output placeholder of the first basic operator set is the same as the output placeholder of the first higher order operator through an absorption operation, and the absorption operation includes: determining the output placeholder of the first basic operator set based on first dependency relationship information, where the first dependency relationship information indicates the dependency relationship between the basic operators in the first basic operator set; determining whether the output placeholder of the first basic operator set is the same as the output placeholder of the first higher order operator; and if the output placeholder of the first basic operator set is different from the output placeholder of the first higher order operator, enabling a pointer of an output operand of the first basic operator set to point to the output placeholder of the first higher order operator, and updating second identification information to first identification information, where the first identification information is identification information of the output operand of the first basic operator set, and the second identification information is identification information of an output operand of the first higher order operator.

It should be noted that the identification information is a "unique" identifier of the output operand, and may be uniquely determined based on a definition of the output operand. In some possible implementations, the identifier information may be a hash value, or may be other unique identifier information. This is not specifically limited in this application.

In the foregoing technical solution, the foregoing absorption operation is used to ensure that a placeholder of a new output operand generated in an operator expanding process is consistent with a placeholder of an output operand of an original operator, thereby ensuring consistency of computing tasks represented before and after the higher order operator is expanded.

With reference to the first aspect, in some implementations of the first aspect, the absorption operation further includes: after the second identification information is updated to the first identification information, when a pointer of the output operand of the first higher order operator is accessed by a pointer synchronizer, determining whether identification information of the pointer synchronizer is equal to the second identification information; and when the identification information of the pointer synchronizer is not equal to the second identification information, updating a pointer of the pointer synchronizer to the pointer of the output operand of the first basic operator set, and updating the identification information of the pointer synchronizer to the second identification information.

In the foregoing technical solution, a new output operand pointer is locally pointed to a placeholder of an output operand of an original operator, identification information of the output operand of the original operator is updated to identification information of the new output operand, and when the output operand of the original operator accesses a pointer next time, the pointer of the output operand of the original operator is refreshed to a pointer of the new output operand. This ensures global reference consistency.

With reference to the first aspect, in some implementations of the first aspect, the dependency relationship between the basic operators in the first basic operator set is determined in the following manner: determining whether an input placeholder of a second basic operator intersects with at least one output placeholder in a first output placeholder set, where the first output placeholder set includes output placeholders of all basic operators in the first basic operator set, and the second basic operator is any basic operator in the first basic operator set; and if the input placeholder of the second basic operator intersects with the at least one output placeholder in the first output placeholder set, determining that a dependency relationship exists between a basic operator corresponding to the at least one output placeholder and the second basic operator.

It should be noted that an input placeholder or an output placeholder of an operator may be one placeholder, or may be a set including a plurality of placeholders. This is not specifically limited in this application.

With reference to the first aspect, in some implementations of the first aspect, an output placeholder of a first operator is determined based on an input operand of the first operator and a type of the first operator, the first operator is any operator obtained in a process of expanding the first higher order operator, and an intersection set between the output placeholder of the first operator and an allocated output placeholder is empty.

In some possible implementations, the first operator is generated by using a customized operator assembly function, and the output placeholder of the first operator is determined by invoking a placeholder allocated by a placeholder/operand allocation module.

According to a second aspect, a computing platform is provided. The computing platform may include one or more computer devices, configured to perform the method in any one of the first aspect or the possible implementations of the first aspect. Specifically, the computing platform may be implemented by hardware, or may be implemented by hardware by executing corresponding software. Specifically, the apparatus includes: a transceiver unit, configured to obtain data and a computing task description, where the computing task description includes computing that needs to be performed on the data; a first processing unit, configured to select a first operator set based on the computing task description, where the first operator set includes a plurality of basic operators; and a second processing unit, configured to execute, based on a dependency relationship between the basic operators in the first operator set, the first operator set to compute the data, to obtain a computation result of the data, where a placeholder of an input operand of one of two basic operators that have the dependency relationship intersects with a placeholder of an output operand of another basic operator.

In some possible implementations, the transceiver unit, the first processing unit, and the second processing unit may be one computer device, or the transceiver unit, the first processing unit, and the second processing unit may be different computer devices. For example, the second processing unit may be one or more computer devices. For example, when the second processing unit is one computer device, the computer device may have one or more hardware platforms, and the plurality of basic operators in the first operator set may be executed by one hardware platform, or may be respectively executed by a plurality of hardware platforms. For example, when the second processing unit is the plurality of computer devices, the data obtained by the transceiver unit and the first operator set selected by the first processing unit may also be input to the plurality of computer devices. The plurality of computer devices may have one or more hardware platforms. The foregoing performing the first operator set to compute the data may also be performing the first operator set to compute the data. Specifically, each computer device in the plurality of computer devices may perform a corresponding basic operator by using one hardware platform, or may perform a corresponding basic operator by using a plurality of hardware platforms. This is not specifically limited in this application.

In some possible implementations, the computing platform may be a cloud computing platform, or the second processing unit on the computing platform is a cloud processing unit. This is not specifically limited in this application.

With reference to the second aspect, in some implementations of the second aspect, the second processing unit is further configured to: determine a first basic operator in the first operator set based on the dependency relationship between the basic operators in the first operator set, where the first basic operator is a basic operator whose intersection set between an input placeholder and an output placeholder of any basic operator in the first operator set is empty; store the data in storage space corresponding to an input placeholder set of the first basic operator; and execute the first basic operator on the data, and execute, based on the dependency relationship between the basic operators in the first operator set, a basic operator in the first operator set other than the first basic operator.

With reference to the second aspect, in some implementations of the second aspect, the first operator set and the dependency relationship between the basic operators in the first operator set are determined based on N basic operator sets. The N basic operator sets are in a one-to-one correspondence with N higher order operators, and the computing on the data can be implemented by using the N higher order operators. A first basic operator set is obtained by expanding a first higher order operator, the first higher order operator is any higher order operator in the N higher order operators, and the first basic operator set is a basic operator set that is in the N basic operator sets and that corresponds to the first higher order operator. An output placeholder of the first basic operator set is the same as an output placeholder of the first higher order operator.

With reference to the second aspect, in some implementations of the second aspect, the N basic operator sets are in a one-to-one correspondence with N pieces of dependency relationship information, and the N pieces of dependency relationship information indicates a dependency relationship between the basic operators in the corresponding basic operator set. The first operator set and the dependency relationship between the basic operators in the first operator set are obtained in the following manner: determining target dependency relationship information based on the N pieces of dependency relationship information, where the target dependency relationship information indicates a dependency relationship of each basic operator in the plurality of basic operators; and determining the first operator set based on the target dependency relationship information and basic operators included in the N basic operator sets, where the target dependency relationship information is the dependency relationship between the basic operators in the first operator set.

With reference to the second aspect, in some implementations of the second aspect, the output placeholder of the first basic operator set is the same as the output placeholder of the first higher order operator through an absorption operation, and the absorption operation includes: determining the output placeholder of the first basic operator set based on first dependency relationship information, where the first dependency relationship information indicates the dependency relationship between the basic operators in the first basic operator set; determining whether the output placeholder of the first basic operator set is the same as the output placeholder of the first higher order operator; and if the output placeholder of the first basic operator set is different from the output placeholder of the first higher order operator, enabling a pointer of an output operand of the first basic operator set to point to the output placeholder of the first higher order operator, and updating second identification information to first identification information, where the first identification information is identification information of the output operand of the first basic operator set, and the second identification information is identification information of an output operand of the first higher order operator.

With reference to the second aspect, in some implementations of the second aspect, the absorption operation further includes: after the second identification information is updated to the first identification information, when a pointer of the output operand of the first higher order operator is accessed by a pointer synchronizer, determining whether identification information of the pointer synchronizer is equal to the second identification information; and when the identification information of the pointer synchronizer is not equal to the second identification information, updating a pointer of the pointer synchronizer to the pointer of the output operand of the first basic operator set, and updating the identification information of the pointer synchronizer to the second identification information.

With reference to the second aspect, in some implementations of the second aspect, the dependency relationship between the basic operators in the first basic operator set is determined in the following manner: determining whether an input placeholder of a second basic operator intersects with at least one output placeholder in a first output placeholder set, where the first output placeholder set includes output placeholders of all basic operators in the first basic operator set, and the second basic operator is any basic operator in the first basic operator set; and if the input placeholder of the second basic operator intersects with the at least one output placeholder in the first output placeholder set, determining that a dependency relationship exists between a basic operator corresponding to the at least one output placeholder and the second basic operator.

With reference to the second aspect, in some implementations of the second aspect, an output placeholder of a first operator is determined based on an input operand of the first operator and a type of the first operator, the first operator is any operator obtained in a process of expanding the first higher order operator, and an intersection set between the output placeholder of the first operator and an allocated output placeholder is empty.

According to a third aspect, a data processing apparatus is provided. The apparatus may be a chip or a circuit, and is configured to perform the method in any one of the first aspect or the possible implementations of the first aspect. Specifically, the apparatus may be implemented by hardware, or may be implemented by hardware executing corresponding software.

In some possible implementations, the apparatus includes modules configured to perform the method according to any one of the first aspect or the possible implementations of the first aspect.

In some possible implementations, the apparatus includes a processor and a memory. The memory is configured to store instructions. When the communication apparatus runs, the processor executes the instructions stored in the memory, so that the communication apparatus performs the data transmission method according to any one of the first aspect or the implementations of the first aspect. It should be noted that the memory may be integrated into the processor, or may be independent of the processor.

In some possible implementations, the apparatus includes a processor. The processor is configured to couple to a memory, read instructions in the memory, and perform, according to the instructions, the data transmission method according to any one of the first aspect or the implementations of the first aspect.

According to a fourth aspect, a computer-readable storage medium is provided. The computer-readable storage medium stores a program. The program enables a communication apparatus to perform the data transmission method according to any one of the foregoing aspects and the implementations of the foregoing aspects.

According to a fifth aspect, this application further provides a computer program product including instructions. When the computer program product runs on a computer, the computer is enabled to perform the data transmission method according to any one of the foregoing aspects.

According to a sixth aspect, a chip system is provided, including a processor, where the processor is connected to a memory. The processor is configured to invoke a computer program from the memory and run the computer program, so that a communication device on which the chip system is installed performs the method in any one of the foregoing aspects and the possible implementations of the foregoing aspects. The memory may be located inside the chip system, or may be located outside the chip system.

## BRIEF DESCRIPTION OF DRAWINGS

FIG. 1 is a schematic diagram of an application scenario of a data processing method according to this application;
FIG. 2 is a schematic diagram of an operator in a data processing method according to this application;
FIG. 3 is a schematic diagram of a computing graph representation according to this application;
FIG. 4 is a schematic diagram of an application architecture of a data processing method according to this application;
FIG. 5 is a schematic diagram of an application framework of a data processing method according to this application;
FIG. 6A and FIG. 6B are a schematic flowchart of a data processing method according to this application;
FIG. 7 is a schematic flowchart of a data processing method according to this application;
FIG. 8 is a schematic flowchart of a data processing method according to this application;

FIG. 9A to FIG. 9C are a schematic diagram of different phase states of a data processing method according to this application;

FIG. 10 is a schematic diagram of an operator dependency relationship in a data processing method according to this application;

FIG. 11 is a schematic flowchart of another data processing method according to this application;

FIG. 12 is a schematic flowchart of still another data processing method according to this application;

FIG. 13 is a schematic flowchart of yet another data processing method according to this application;

FIG. 14 is a schematic flowchart of still yet another data processing method according to this application;

FIG. 15 is a schematic diagram of a computing platform according to this application; and

FIG. 16 is a schematic diagram of a data processing apparatus according to this application.

## DESCRIPTION OF EMBODIMENTS

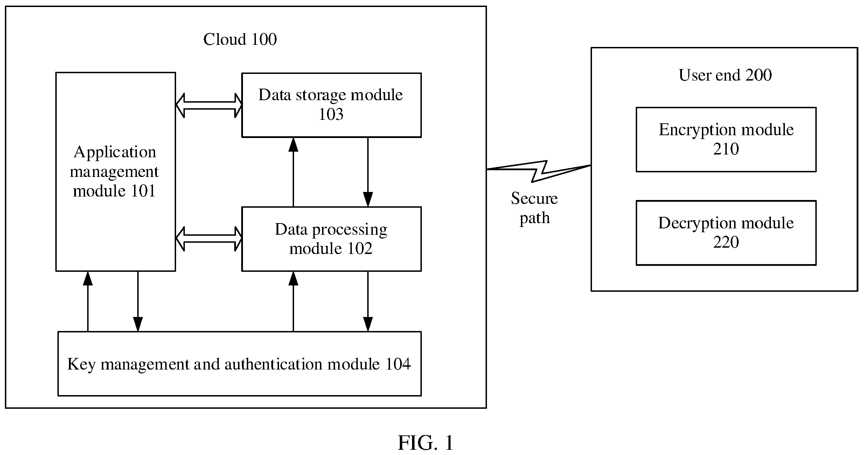

The following describes technical solutions of this application with reference to accompanying drawings. For ease of understanding, the following describes a scenario to which embodiments of this application are applicable with reference to FIG. 1.

FIG. 1 is a schematic diagram of an application scenario of a data processing method according to this application. Specifically, a cloud 100 includes an application management module 101, a data processing module 102, a data storage module 103, and a key management and authentication module 104. The application management module 101 is responsible for overall processing of user requests. The data processing module 102 is configured to perform a task of performing an operation on data. The data storage module 103 is configured to store data, store and extract user data based on a recorded user data location, and is responsible for information exchange between users. The key management and authentication module 104 is configured to apply for a key or perform user authentication. A user performs information interaction with the cloud by using a cloud computing system login program on a user end 200. The user end 200 is responsible for completing work such as submitting a user request to the cloud 100, encrypting and decrypting user privacy data, and uploading and downloading data. To ensure data security in cloud computing, a fully homomorphic encryption algorithm may be used in cloud computing to process the data. Specifically, a fully homomorphic encryption mechanism may enable the user or a trusted third party to directly perform a processing operation on the data without exposing original data, and the user can obtain processed data by decrypting an operation result. For example, in a medical information system, an electronic medical record is stored in ciphertext on a cloud server. When a health department needs to learn of a geographical location and age distribution of patients with a disease in a region to cope with possible public health security problems, the encrypted electronic medical record data can be sent to a professional data processing service provider for processing. After a processing result is obtained, correct data can be obtained through decryption.

It should be understood that the application scenario shown in FIG. 1 is merely an example for description. The data processing method and apparatus provided in embodiments of this application may be further used in another data processing scenario based on a homomorphic encryption algorithm, or may be used in other data processing that is not based on a cryptographic algorithm. The data processing method provided in embodiments of this application may be used to process ciphertext data, or may be used to process plaintext data or plaintext-ciphertext mixed data. This is not specifically limited in embodiments of this application.

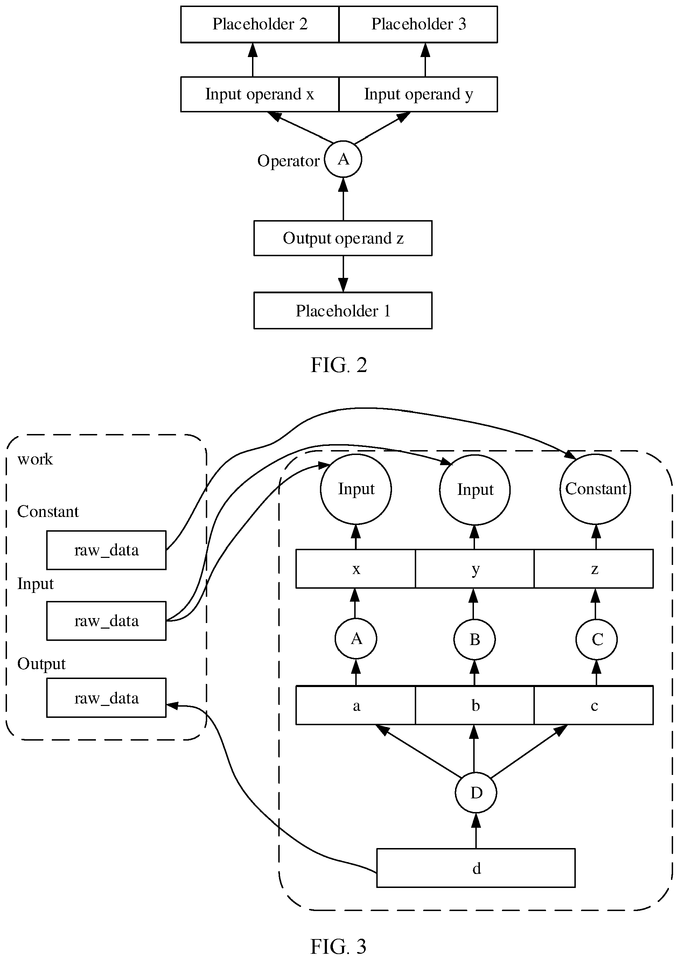

For ease of understanding embodiments of this application, the following briefly describes related concepts in embodiments of this application with reference to FIG. 2 and FIG. 3.

1. Fully homomorphic encryption (fully homomorphic encryption, FHE): a type of encryption algorithm that supports computation on ciphertext, which is equivalent to computation on plaintext. A computation process on the ciphertext can be completed in an untrusted environment without worrying about data privacy leakage.

2. Heterogeneous computing (heterogeneous computing, HC): a hybrid computing solution that uses more than one hardware platform, for example, a computing solution in which both a central processing unit (central processing unit, CPU) and a graphics processing unit (graphics processing unit, GPU) are used, or both a computing scheme of CPU and a field programmable gate array (field-programmable gate array, FPGA) are used.

3. Lattice algebra (lattice algebra, LA): an algebraic structure defined in a high-dimensional linear space. At present, all mathematical difficulties of bottom-layer dependency of homomorphic encryption algorithms are based on the lattice algebra. Common mathematical difficulties include an on-lattice shortest vector problem (shortest vector problem, SVP) or a learning with error (learning with error, LWE) problem.

4. Upper layer: a homomorphic encryption algorithm library, including a higher order operator that can be used to represent a computing task. The computing task represented by the higher order operator is implemented by invoking a basic operator of an algebra library.

5. Bottom layer: an algebraic library, which provides a basic operator for a computing engine to execute a computing task. A bottom layer interface is an interface between the algebraic library and a hardware platform.

6. Placeholder: a set of data blocks of a specific unit size, indicating raw data without a type. In the process of describing the computing graph, no specific value is involved, but an abstract representation is required to distinguish different data and data sizes. In some possible implementations, it is assumed that all data may be represented as data blocks of a specific unit size (for example, 64 bits), a size of the placeholder is a quantity of data blocks of a unit size included in the placeholder, and an intersection set and a union set of the placeholders are an intersection set and a union set of sets of the data blocks.

7. Operand: a set of one or more placeholders. The placeholders in the set do not intersect. That is, an intersection set of the placeholders in the operand is empty. An operand can be considered as whole data, and an operand can carry some additional information, such as a data type. A size of the operand is a sum of sizes of the placeholders contained in the operand.

It should be understood that the operand may be considered as a "dressed" placeholder. A same placeholder may "wear different clothes", which means that a same placeholder (raw data) may be considered as different types of operands in different scenarios. Different operands may also include a same placeholder.

In some possible implementations, an operand may be considered as a placeholder. In this case, data represented by the placeholder is a union set of all placeholders in the set.

It should be understood that an intersection set of operands is an intersection set of data placeholders represented by the operands, and a union set of operands is a union set of data placeholders represented by the operands.

8. Operator: a basic computing unit. An operator includes an operator type, several ($\geq 0$) input operands, and one output operand, as shown in FIG. 2. In other words, an input and an output of the operator are operands, not placeholders.

In some possible implementations, an input/output operand of the operator may be equivalent to an input/output placeholder of the operator. In this case, the input/output placeholder of the operator represents a union set of all placeholders of all input/output operands of the operator.

9. Dependency relationship between operators: If an input placeholder of an operator A intersects with an output placeholder of an operator B, that is, an intersection set is not empty, the operator A depends on the operator B. This means that the operator B needs to be executed before the operator A during computation.

10. Computing graph (computing graph): a set of operators that are dependent on each other forms a directed acyclic graph (directed acyclic graph, DAG), which indicates a complete computing task, that is, a type of computation to be performed on data. Specifically, as shown in FIG. 3, A, B, C, and D represent operators, and a, b, c, d, x, y and z represent operands. It should be understood that cyclic dependency does not occur between operators. In this embodiment of this application, a computing task described in the computing graph includes an algebraic data structure and an operator, and is irrelevant to a specific hardware platform and a computing engine for implementation. Therefore, front-end decoupling and back-end decoupling can be implemented.

It should be understood that a sequential dependency relationship of the operator may be obtained through analysis from the operator set. Therefore, the dependency relationship may be explicitly stored in the computing graph, or may not be stored.

As described above, in a current existing technical framework, after a user of a cryptographic algorithm library invokes a higher order operator of an upper-layer homomorphic encryption algorithm to describe a computing task, the higher order operator directly invokes code of basic operators based on function invoking logic to complete computing. Specific implementation code of the basic operators is generally compiled based on a specific hardware platform. Therefore, it is difficult to optimize or accelerate the basic operators by using another hardware platform. Consequently, the current open-source library of homomorphic encryption cannot effectively support heterogeneous computing. In addition, because the computing engine cannot learn of an entire computing task, the computing engine can only need to execute the computing task based on an invoking relationship and a sequence in which the operators appear, which easily causes a waste of computing power. In addition, the computing engine needs to rely on an operator invoking relationship provided by an upper layer to implement computing, so that front-end computing task representation based on a higher order operator is relatively coupled with execution of a back-end computing task. Consequently, when optimizing a basic operator, a software and hardware engineer needs to consider a logical relationship between an upper-layer higher order operator and the basic operator, and optimization difficulty and costs are high. To make data processing more intuitive, the following uses a homomorphic encryption algorithm library (homomorphic encryption library, HELib), a lattice cipher open-source library Palisade, and a simple encrypted arithmetic library (simple encrypted arithmetic library, SEAL) as examples to describe a feature of a homomorphic encryption open-source library.

Both the HELib and the Palisade are open-source fast number theory algorithm libraries

(number theory algorithm library, NTL). A bottom layer is an open-source high-precision integer library GNU multiple precision arithmetic library (GNU multiple precision arithmetic library, GMP). When a user invokes a higher order operator of the upper-layer homomorphic encryption algorithm, a bottom-layer interface directly invokes code of a bottom-layer basic operator based on the invoking relationship between the higher order operator and the basic operator to implement computation. In other words, the computing engine can execute computing tasks only based on an operator invoking sequence, and cannot master overall computing tasks. As a result, operators of a same type that appear at different locations in an invoking function cannot be combined for execution, which may cause a waste of computing power. In addition, neither the NTL nor the GMP supports GPU acceleration. Even if the two libraries are extended to support the GPU and another hardware platform, due to the limitation of the existing architecture, the GPU can only be invoked inside an operator that supports the GPU to optimize a single operator designed for the GPU. Overall optimization between operators, such as a plurality of operators being combined and accelerated in parallel, that supports different hardware platforms cannot be performed. Therefore, the NTL and the GMP need to support heterogeneous computing. Each time the NTL and the GMP are migrated to a new hardware platform, implementation code of the basic operator may need to be changed based on a feature of the hardware platform. In addition, because an invoking relationship between the higher order operator and the basic operator needs to be compiled by a cryptographer, after specific implementation code of the basic operator is changed, the invoking relationship between the higher order operator and the basic operator may also need to be changed. Therefore, not only bottom-layer implementation requires a large amount of manpower, but also an upper-layer application interface cannot remain unchanged. Therefore, migration costs are high.

An architecture of the SEAL library is similar to that of the HELib and the Palisade. A difference is that the SEAL library does not invoke another algebraic library at a bottom layer. Instead, the SEAL library develops a lattice algebra operator required by the bottom layer for fully homomorphic encryption based on the CPU. Although the SEAL library has developed a basic operator, the computing engine also depends on the invoking relationship between the higher order operator and the basic operator to execute the computing task. Therefore, the SEAL library cannot learn the overall computing task. This makes the architecture similar to the HELib and the Palisade have disadvantages: high costs of cross-hardware platform migration, and strong coupling between construction of upper-layer computing tasks and execution of computing tasks of the computing engine.

In view of this, embodiments of this application provide a data processing method and a computing platform. Ciphertext is processed based on a fully homomorphic encryption algorithm architecture that can provide a computing graph that can describe an entire computing task for a computing engine. When executing the computing task, the computing engine may learn of the entire computing task by using the computing graph. Therefore, combination processing of operators of a same type can be implemented based on the computing graph, thereby improving a computing speed while ensuring correct execution of the computing task. In addition, in the algorithm architecture, for a determined computing task, a computing graph including basic operators indicates that a dependency relationship between the basic operators is also determined. Therefore, the computing engine may perform computing based on the computing graph from a basic operator that does not have a dependency operator, until all basic operators in the computing graph are executed, and computing is completed without relying on an upper-layer higher order operator. Therefore, construction of the computing task based on the higher order operator can be decoupled from execution of the computing task. In this way, software and hardware engineers do not need to consider an invoking relationship between a higher order operator and a basic operator when optimizing a basic operator. In addition, because the computing graph represents a dependency relationship between the basic operators, and is irrelevant to a specific hardware platform for implementation, cross-hardware platform migration of an algorithm architecture can be implemented, so that heterogeneous acceleration of multiple hardware platforms can be supported, and a computing speed of data processing is further improved.

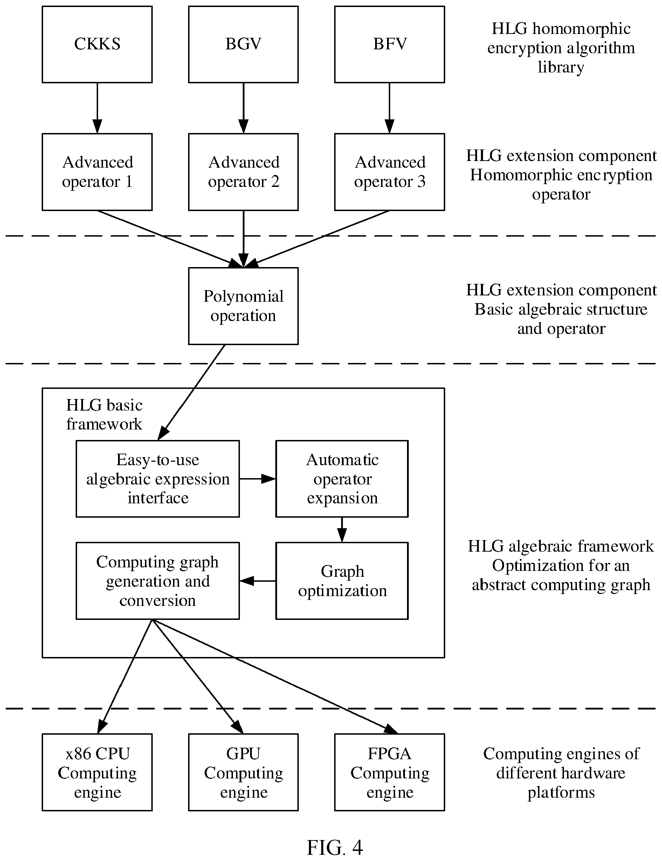

FIG. 4 is a schematic diagram of an application architecture required for implementing a data processing method according to an embodiment of this application. The application architecture may be applied to the application scenario shown in FIG. 1. FIG. 4 shows a lattice algebra computing graph (heterogeneous lattice graph, HLG) architecture that supports heterogeneous computing. For example, the HLG architecture can support homomorphic encryption algorithms such as a BGV algorithm (Zvika Brakerski, Craig Gentry and Vinod Vaikuntanathan, BGV), a BFV algorithm (Zvika Brakerski, Junfeng Fan and Frederik Vercauteren, BFV), and a CKKS algorithm (Jung Hee Cheon, Andrey Kim, Miran Kim and Yongsoo Song, CKKS). It should be understood that a computing task based on the fully homomorphic encryption algorithm does not have a logic branch, and does not need to support condition determining, loop, or the like, that is, there is no control flow. Therefore, the computing task may be represented as a DAG. Therefore, in the HLG architecture provided in this embodiment of this application, an abstract computing graph representation layer is added between an upper-layer higher order operator and a bottom-layer basic operator. The computing graph representation layer describes the overall computing task by using the DAG. Based on the computing graph, a computing engine learns a dependency relationship between the basic operators, and can complete computing based on the basic operators and the relationship between the basic operators. In other words, decoupling can be implemented between the front-end computing graph representation based on the higher order operator and back-end computing task execution based on the basic operator. In addition, a hardware engineer can optimize the basic operator based on a feature of the overall computing graph and a feature of the hardware platform to improve overall computing performance without knowing algebraic or cryptology knowledge related to the higher order operator in the homomorphic encryption algorithm library. In addition, an expansion granularity of the higher order operator is adjusted by using a customized basic operator. For a same computing task, a dependency relationship between operators is clear. Therefore, only specific implementation code of the corresponding basic operator needs to be changed on different hardware platforms. Therefore, a homomorphic encryption algorithm library can be migrated across hardware platforms. In this way, algorithm code in an upper-layer homomorphic encryption algorithm library can be compiled once and run on a plurality of hardware platforms. Therefore, after designing a new algorithm, a cryptographer can perform an experiment on the plurality of hardware platforms, which is very friendly to a cryptographer in designing a new algorithm.

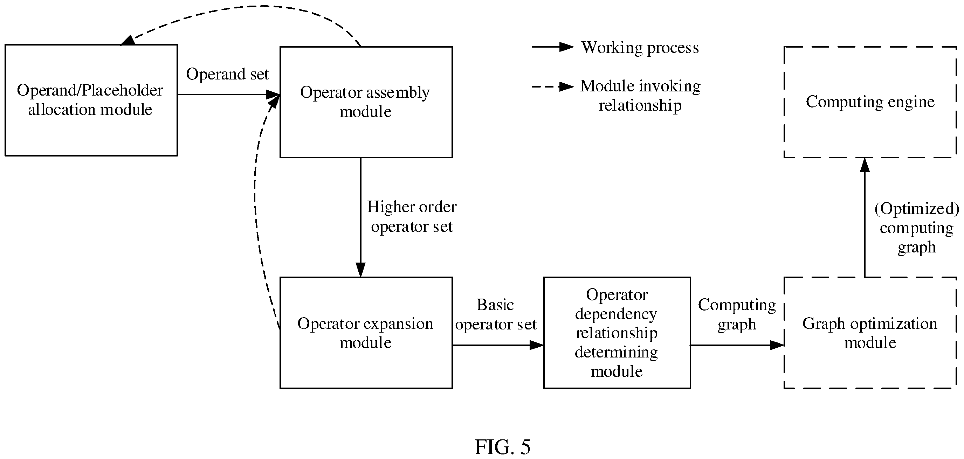

FIG. 5 is a schematic diagram of an HLG basic framework required for implementing a data processing method according to an embodiment of this application. As shown in FIG. 5, the HLG framework includes an operand/placeholder allocation module, an operator assembly module, an operator expansion module, and an operator dependency relationship determining module. In some possible implementations, the HLG framework may further include a graph optimization module and/or a computing engine. It should be noted that, because acceleration by using an RNS (residue number system) system is a conventional means, to enable the HLG framework to perform acceleration by using an RNS algorithm, the HLG framework needs to support any splitting and combination of data. Therefore, in an HLG basic framework, an operator assembly function and an operator expansion function may be defined for each operator. The operator assembly function is used to generate an operator based on an input operand and an operator type, and the operator expansion function is used to expand a higher order operator into a basic operator set. In some possible implementations, a specific implementation of an operator dedicated to the computing engine may be further defined. It should be understood that the HLG framework shown in FIG. 5 is merely an example for description, and a functional module in the HLG framework should not be simply understood as a functional entity.

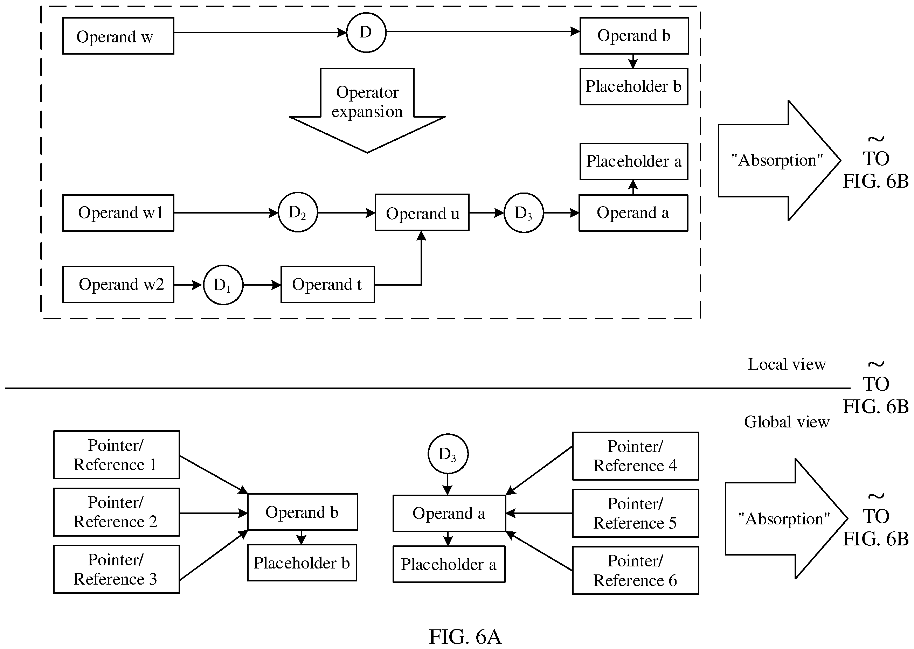

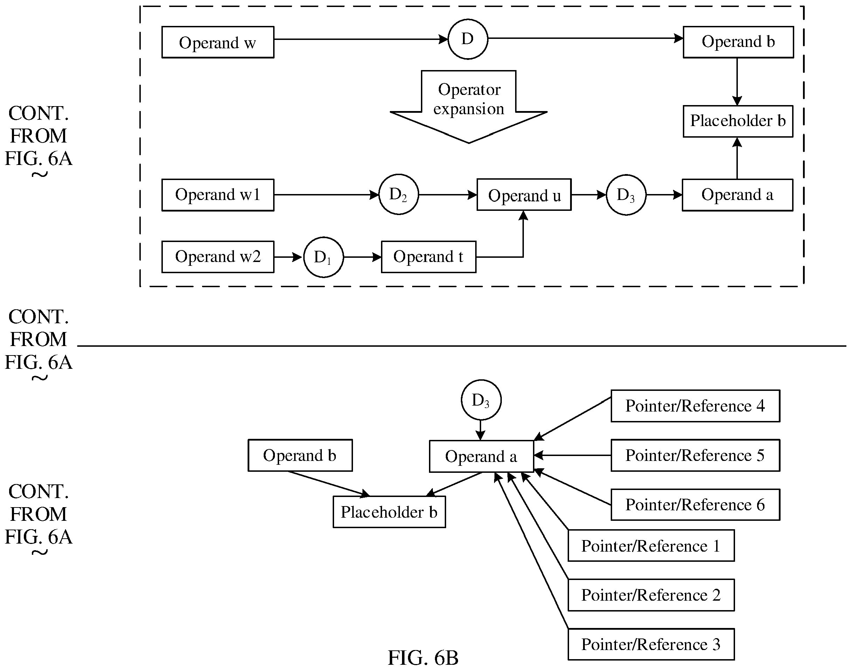

The following describes functions of the modules in detail with reference to FIG. 6A and FIG. 6B to FIG. 14.

(1) Operand/placeholder allocation module: configured to allocate a virtual data placeholder, to represent data of a specific length in the computing graph. For this module, an operand type and a required placeholder size (quantity of unit data blocks) are given, and a new operand is returned. The operand contains a new placeholder that meets the size requirement and does not intersect with an existing placeholder.

In some possible implementations, the placeholder may be described as a left-closed and right-open interval [x, y), where x and y are integers. For example, [0, 4096) and [4096, 8192) represent two different placeholders of a data block with a size of 4096 unit sizes. In some possible implementations, a size of a data block of a unit size may be defined as required. For example, a common size may be 1 bit, 2 bits, 4 bits, 8 bits, 16 bits, or 64 bits. This is not specifically limited in embodiments of this application. Further, the operand/placeholder allocation module stores a counter counter, which is initially 0. When an operand type T and a placeholder size size are input, a T-type operand is returned, including only one placeholder [counter, counter + size), and the counter increases by size, that is, counter = counter + size.

It should be understood that, for non-empty placeholders $ph1 = [x1, y1)$, and $ph2 = [x2, y2)$, when and only when $x1 <= x2 < y1$ or $x1 < y2 <= y1$, the placeholders ph1 and ph2 intersect.

In some possible manners, the placeholder may be described as a set including integers, and each integer represents a different abstract unit data block, for example, {0, 1, 2, ..., 4095}, {4096, 4097, ..., 8191}. Further, the operand/placeholder allocation module stores a counter counter, which is initially 0. When an operand type T and a placeholder size size are input, a T-type operand is returned, including only one placeholder {counter, counter + 1, ..., counter + size - 1}, and the counter increases by size, that is, counter = counter + size.

(2) Operator assembly module: In some possible implementations, the operator assembly module is implemented by using the operator assembly function. For this module, several input operands X0, X1, ..., Xn and an operator type T are given, and a new operator OP is output. In some possible implementations, a quantity of input operands may also be zero, that is, a new operator is output when the operator type is given. It should be noted that the operator assembly function may be defined by an algebraic library user, that is, a cryptographer.

Further, the operator assembly module defines a set of candidate operators that describe the computing task.

In some possible implementations, an operator type of the OP is T, an input operand is X0, X1, ..., Xn, and an output operand is a new operand Y A placeholder of the operand Y is a placeholder newly allocated by invoking the operand/placeholder allocation module, and the placeholder does not intersect with all existing placeholders, that is, output placeholders do not intersect.

(3) Operator expansion module: configured to expand a target operator into a second order operator set, where a computing task represented by the second order operator set is the same as a computing task represented by an original target operator. In some possible implementations, the operator expansion module is implemented by using an operator expansion function. It should be noted that the operator expansion function may be defined by an algebraic library user, that is, a cryptographer. In some possible implementations, a process of expanding the higher order operator is "level-by-level expansion", that is, the higher order operator is first expanded into a plurality of second order operators by using the operator expansion module. Specifically, the module invokes the higher order operator set of the operator assembly module, that is, a single higher order operator A is input, and an equivalent operator set {A$_i$} is output. In other words, the operator A is expanded into several second order operators A$_i$. i = 0, 1, 2...

In some possible implementations, a random protection mechanism may be introduced into the operator expansion function, for example, useless code, a redundant computation branch, operator splitting, or equivalent transformation. This is not limited in this embodiment of this application.

It should be noted that all higher order operators in the candidate operator set are expanded based on the operator expansion function, until only a basic operator that does not need to be further expanded remains in the candidate operator set. The basic operators do not need to be expanded. Therefore, implementation code of the basic operators needs to be provided. In some possible implementations, the basic operator is an operator that supports lattice algebra. In some possible implementations, the user may customize which operators are basic operators. Further, a granularity of expanding the higher order operator may be adjusted by customizing the basic operator.

It should be further noted that, to ensure consistency of computing tasks described in the computing graph, the expanded operator set needs to be equivalent to a computing task represented by an operator before expansion. In addition, to avoid damaging a dependency relationship between the operator and another operator before and after the expansion, an overall input placeholder set of the expanded operator set needs to be consistent with an overall input placeholder before the operator is expanded, and an overall output placeholder of the expanded operator set needs to be consistent with an output placeholder before the operator is expanded.

In some possible implementations, a new output operand is generated in a process of executing the operator expansion function, and a placeholder of the new output operand is different from a placeholder of an output operand of the original operator. To keep a dependency relationship before and after the computing graph unchanged, this embodiment of this application provides an "absorption operation", so that after the operator is expanded, it is ensured that the new output operand of the expanded operator set is consistent with the placeholder of the output operand of the original operator. Further, because the new output operand and the output operand of the original operator may also be referenced in another scenario, to ensure global consistency, all references to the new output operands further need to be refreshed.

The following describes a specific implementation of the "absorption operation" with reference to FIG. 6A and FIG. 6B to FIG. 9A to FIG. 9C.

FIG. 6A and FIG. 6B show changes of local and global information before and after the "absorption operation" is performed. From a local perspective, an operator D is expanded into operators D1, D2, and D3. After the operator is expanded, a new operand a is generated, and a placeholder of the operand a is a placeholder a, which is different from a placeholder b of an operand b before the operator D is expanded. As a result, a dependency relationship of a computing graph before and after the operator is expanded changes. After the "absorption operation" is performed, the operand a abandons its own placeholder a and points to the placeholder b of the operand b. In addition, the operand b is still an output operand of the operator D, and the operand a is still an output operand of the operator D3. In addition, from a global perspective, all references that originally point to the operand b now need to point to the operand a after the "absorption operation".

More specifically, to make all references originally pointing to the operand b point to the operand a, all pointers or references to the operand need to be completed by using a pointer synchronizer PtrSyncer instead. It should be noted that, in addition to storing the pointer of the operand, the pointer synchronizer further stores a hash value. In addition, a hash value field is added for all operand objects, and the hash value is used to uniquely identify the operand object. Further, a mapping table ObjMap from all hash functions to all the operand objects needs to be defined, which is used to indicate a mapping relationship between a hash value and an operand obj ect.

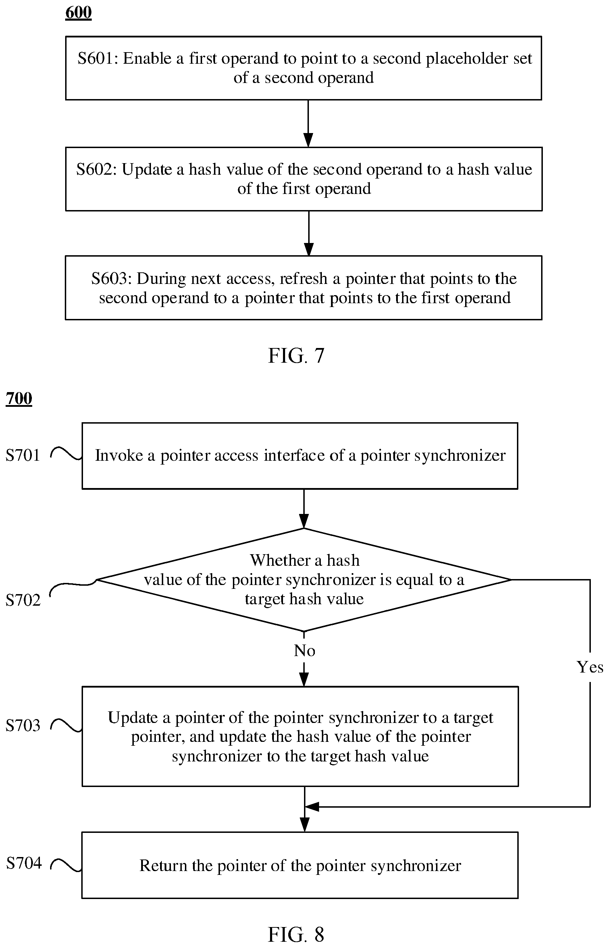

In some possible implementations, the foregoing "absorption" and synchronization operations may be completed by using the method 600 shown in FIG. 7. Specifically, the method 600 includes the following steps.

S601: Enable a first operand to point to a second placeholder of a second operand.

For example, the first operand may be the operand a, the second operand may be the operand b, and the second placeholder may be the placeholder b. It should be understood that the second placeholder may be one placeholder, or may be a set including a plurality of placeholders. This is not specifically limited in embodiments of this application.

S602: Update a hash value of the second operand to a hash value of the first operand.

S603: During next access, refresh a pointer that points to the second operand to a pointer that points to the first operand.

Specifically, when accessing a pointer next time, a pointer synchronizer of the second operand refreshes a pointer that originally points to the second operand to a pointer that points to the first operand. In some possible implementations, the hash value in the pointer synchronizer of the second operand is updated to the hash value of the first operand.

In some possible implementations, for a method for accessing a pointer by using a pointer synchronizer, refer to a method 700 shown in FIG. 8. The method 700 includes the following steps.

S701: Invoke a pointer access interface of the pointer synchronizer.

In some possible implementations, a pointer access interface PtrSyncer.Ptr() of the pointer synchronizer PtrSyncer is invoked.

S702: Determine whether a hash value of the pointer synchronizer is equal to a target hash value. If the hash value of the pointer synchronizer is equal to the target hash value, perform S704. If the hash value of the pointer synchronizer is not equal to the target hash value, continue to perform S703.

For example, the hash value of the pointer synchronizer is the hash value of the second operand, and the target hash value is the hash value of the first operand. In some possible implementations, the hash value of the pointer synchronizer may be represented as PtrSyncer.Hash, and the target hash value may be represented as PtrSyncer.ptr.Obj.Hash.

When PtrSyncer.Hash! = PtrSyncer.ptr.Obj.Hash, continue to perform S703.

S703: Update the pointer of the pointer synchronizer to the target pointer, and update the hash value of the pointer synchronizer to the target hash value.

For example, the target pointer is a pointer of the first operand.

In some possible implementations, updating of the target pointer is completed based on the mapping table ObjMap. Specifically, P = ObjMap[PtrSyncer.ptr.Obj.Hash], and PtrSyncer.ptr = P. Further, PtrSyncer.Hash = P.Obj.Hash. At this point, the pointer of the pointer synchronizer is updated.

S704: Return the pointer of the pointer synchronizer.

It should be understood that the returned pointer of the pointer synchronizer is the target pointer, for example, the pointer of the first operand. In some possible implementations, a return value further includes a hash value corresponding to the target pointer. In some possible implementations, the return value may be PtrSyncer.ptr.

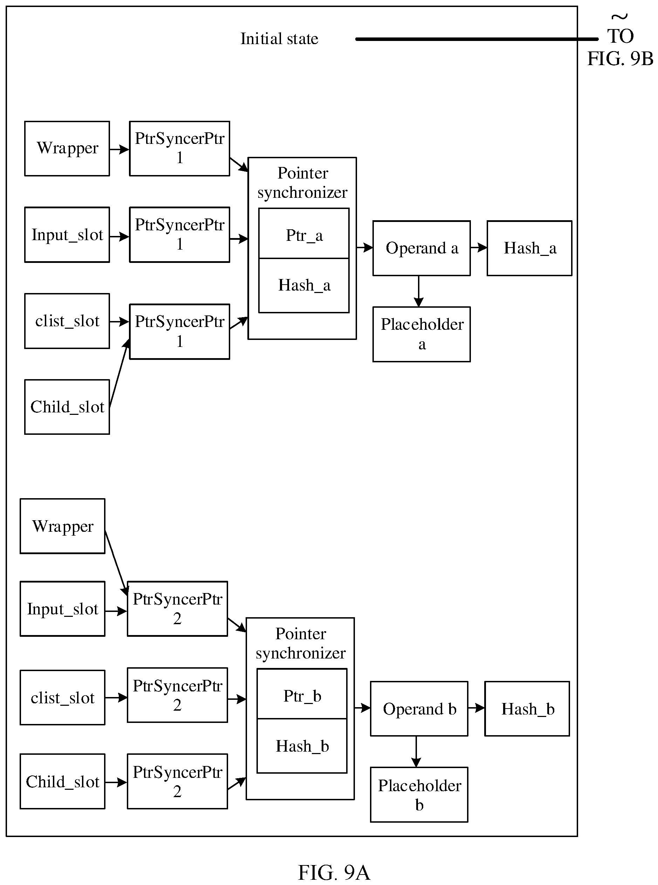

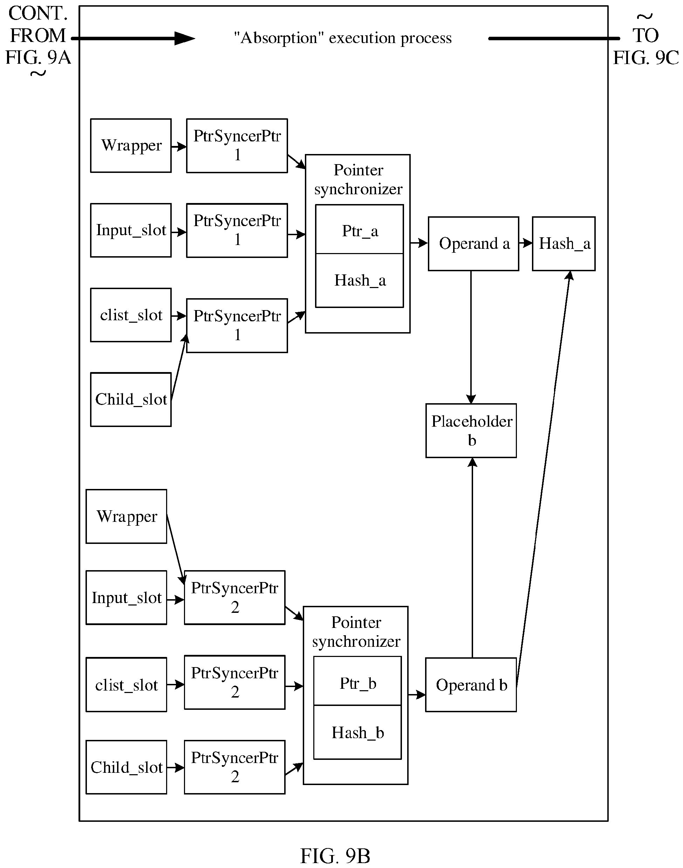

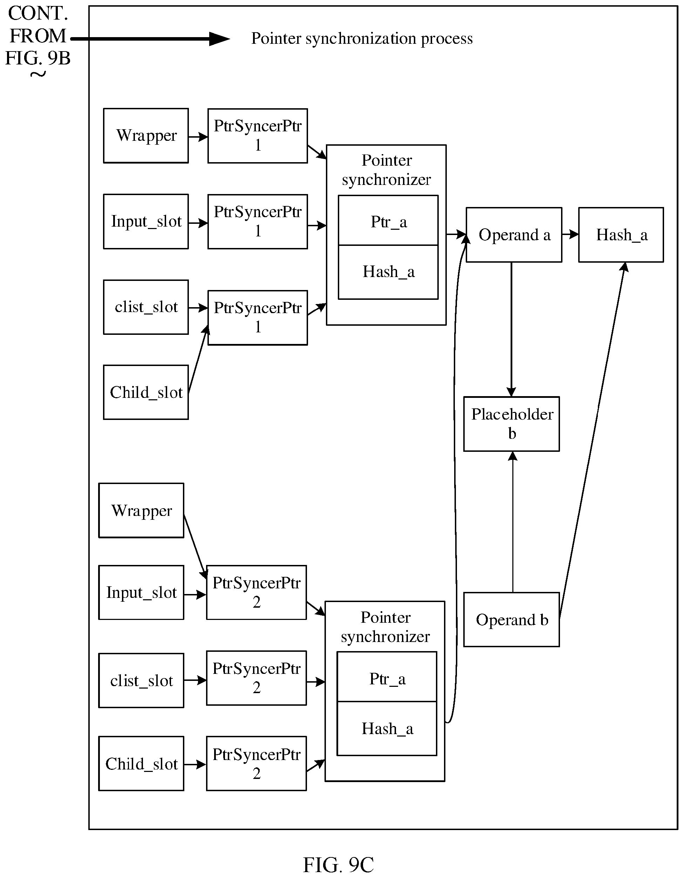

It should be understood that, before the "absorption operation" is performed, in other words, when the operator expansion module is in the initial state shown in FIG. 9A to FIG. 9C, a pointer Ptr_b and a pointer Ptr_a respectively point to different operators and placeholders. Both the operand a and the operand b have a plurality of different references. A quantity of references of pointers other than the pointer Ptr b and the pointer Ptr_a cannot be learned of from a local part, and a total quantity of references globally cannot be learned of. After "absorption" in S601 and S602, the operand a points to the placeholder b, and the hash value of the operand b becomes a hash value Hash_a of the operand a. Further, in a pointer synchronization process, after the pointer is accessed by using a pointer synchronizer PtrSyncer_b, a pointer Ptr_b of the original operand b is refreshed to the pointer Ptr_a, and the global pointer synchronization process in S703 is completed.

According to the data processing method provided in this embodiment of this application, a pointer delay synchronization is performed, to ensure that a placeholder of a new output operand generated in an operator expanding process is consistent with a placeholder of an output operand of an original operator. More specifically, a new output operand pointer is locally pointed to a placeholder of an output operand of an original operator, a hash value of the output operand of the original operator is updated to a hash value of the new output operand, and when the output operand of the original operator accesses a pointer next time, the pointer of the output operand of the original operator is refreshed to a pointer of the new output operand. This ensures global reference consistency.

(4) Operator dependency relationship determining module: A basic operator set S is given, and a sequence dependency relationship between operators is determined, to form a computing graph.

In some possible implementations, a dependency set and a notification set of an operator B are separately defined as follows.

The dependency set of the operator B indicates a set of operators on which the operator B depends. An intersection set of output placeholders of all operators in the set and input placeholders of the operator B is not empty, and there is no dependency of the operator B. In other words, the operator B can be executed only after all operators in the dependency set of the operator B are executed.

A notification set of the operator B indicates a set of all operators that depend on the operator B. An intersection set of input placeholders of all operators in the set and output placeholders of the operator B is not empty, and no other operator depends on the operator B. That is, after the operator B is executed, the operator B may be indicated to start to check whether the operator B meets an execution condition (that is, whether the dependency set is empty).

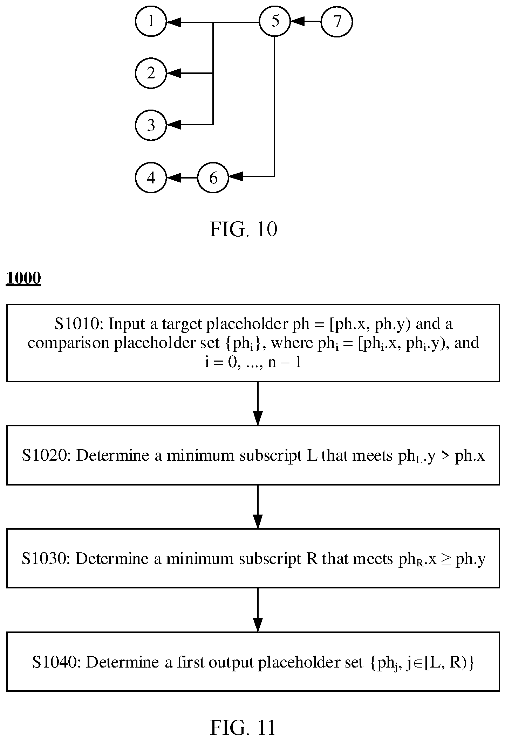

It is assumed that each operator has a unique identifier, which is represented by an integer. Specifically, as shown in FIG. 10, an arrow of an operator 7 points to an operator 5, indicating that the operator 7 depends on the operator 5. A dependency set and a notification set of an operator shown in FIG. 10 are defined in Table 1.

Table 1: Dependency set and notification set instances

| Dependency set of all operators | Notification set of all operators |
| --- | --- |
| 1 - >{} | 1 -> {5} |

(continued)

| Dependency set of all operators | Notification set of all operators |
|---|---|
| 2 -> {} | 2 -> {5} |
| 3 -> {} | 3 -> {5} |
| 4 -> {} | 4 -> {6} |
| 5 -> {1, 2, 3, 6} | 5 -> {7} |
| 6 -> {4} | 6 -> {5} |
| 7 - >{5} | 7 -> {} |

It should be noted that a corresponding generation operator OP(a) may be found for any placeholder a, so that a is one of output placeholders of OP(a). It should be understood that OP(a) may have a unique definition based on a setting that output placeholders of all operators do not overlap.

Under the foregoing premise, a working process of an operator dependency relationship determining module is specifically as follows.

1. Combining output placeholders of all operators in an operator set S into a set $S_{out}$ = {phi}.

2. For an input placeholder $ph_A$ of each operator A in the operator set S, a placeholder set $S_A$ that is in $S_{out}$ and that intersects with the $ph_A$ is found. It should be understood that $S_A$ is a subset of $S_{out}$. Then, a generation operator set $OP(S_A)$ corresponding to all placeholders in $S_A$ is obtained. In this case, it is determined that the operator A depends on all operators in the operator set $OP(S_A)$.

3. After all operators in the operator set have their dependency relationships, the S set plus the dependency can completely represent a computing graph.

It should be noted that an input operand set and an output operand set of an entire computing graph may be further analyzed from the computing graph. Therefore, an entire input operand set and an entire output operand set may be explicitly stored in the computing graph, or may not be stored. It should be understood that the input operand set is an operand that does not depend on another operand, and is input data of the entire computing graph. The output operand set is an operand set that is not referenced by any other operator as an input, and is output data of the entire computing graph.

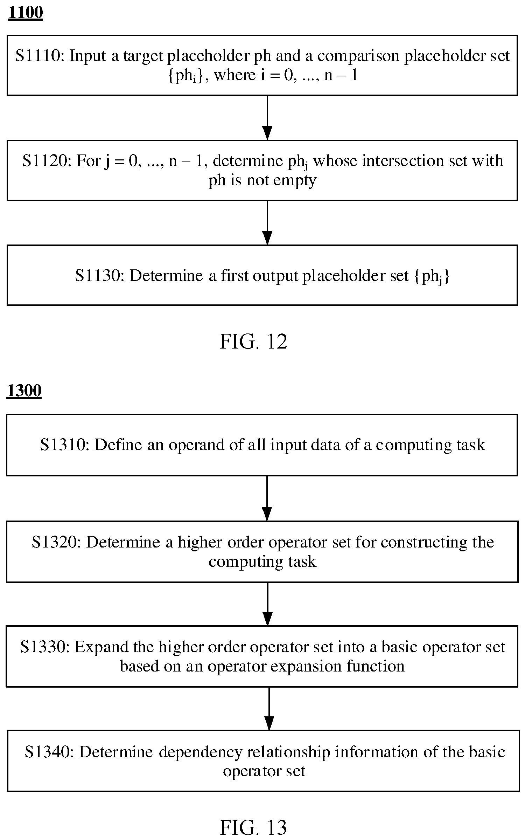

The following describes a method for determining the placeholder set $S_A$ with reference to FIG. 11 and FIG. 12.

In some possible implementations, the input placeholder of the operator A is defined as a target placeholder ph = [ph.x, ph.y), and a comparison placeholder set $S_{out}$ = {$ph_i$}, where $ph_i$ = [$ph_i$. x, $ph_i$.y), i = 0, ..., n - 1, and n is a quantity of operators in the operator set S. Placeholders in the comparison placeholder set {$ph_i$} are sorted in ascending order of $ph_i.x$. In addition, based on an assumption that output placeholders of all operators do not overlap, placeholders $ph_i$ in the placeholder set $S_{out}$ do not overlap. Specifically, the comparison placeholder set {$ph_i$} meets two conditions: (1) for any i, $ph_i.x < ph_i.y$; (2) for any i and j, when $0 \leq i < j < n$ is met, $ph_i.y <= ph_j.x$.

Based on the foregoing conditions, the dependency set of the operator A may be determined with reference to the method 1000 shown in FIG. 11. Specifically, the method 1000 includes the following steps.

S1010: Input a target placeholder ph = [ph.x, ph.y) and a comparison placeholder set

$$S_{out} = \{ph_i\}, \text{ where } ph_i = [ph_i.x, \ ph_i.y), \text{ and i} = 0, ..., n - 1.$$

S1020: Determine a minimum subscript L that meets $ph_L.y > ph.x$.

S1030: Determine a minimum subscript R that meets $ph_R.x \geq ph.y$.

S1040: Determine a first output placeholder set { $ph_j, j \in [L, R)$}.

It should be understood that the first output placeholder set { $ph_j, j \in [L, R)$} includes all placeholders that are in the set {$ph_i$} and whose intersection set with ph is not empty. In other words, the first output placeholder set is the output placeholder set $S_A$ that has an intersection set with the input placeholder ph = [ph.x, ph.y) of the operator A. Further, the operator set $OP(S_A)$ is a dependency set of the operator A. It should be understood that, when $L \geq R$, $S_A$ is an empty set, that is, the operator A has no dependency set.

In some possible implementations, S1020 and S1030 may be implemented by using a "binary search" algorithm, and complexity is $O(log(n))$.

In some possible implementations, the dependency set of the operator A may be further determined with reference to the method 1100 shown in FIG. 12. Specifically, the method 1100 includes the following steps.

51110: Input a target placeholder ph and a comparison placeholder set $S_{out}$ = $\{ph_i\}$, where i = 0, ..., n - 1.

S1120: For j = 0, ..., n - 1, determine $ph_j$ whose intersection set with ph is not empty.

In some possible implementations, a set ret = an empty set is defined. For j = 0, ..., n - 1, if an intersection set of ph and $ph_j$ is not empty, $ph_j$ is added to the set ret. It should be understood that complexity of the search method is O(n).

S1130: Determine a first output placeholder set $\{ph_j\}$.

It should be understood that the set ret determined in S1120 is the first output placeholder set, that is, the output placeholder set $S_A$ that has an intersection set with the input placeholder of the operator A. When the set ret is an empty set, $S_A$ is an empty set, that is, the operator A has no dependency set. In this case, the input placeholder of the operator A is used to store actual input data of the computing task.

According to the data processing method provided in this embodiment of this application, an overall computing task is constructed by determining basic operator sets and a dependency relationship between the basic operator sets, so that a computing engine can execute an overall computing task including only the basic operator, thereby decoupling computing task construction and computing task execution. Further, computing engines of different hardware platforms may be specifically implemented based on a same computing task determined in this embodiment of this application. Therefore, heterogeneous computing can be implemented.

(5) Graph optimization module: configured to optimize the computing graph. Specifically, equivalent transformation may be performed on the computing graph to reduce repeated computation, improve execution performance, and the like. In some possible implementations, a graph optimization algorithm such as pruning a useless computation branch, operator deduplication, automatic pre-computation, and automatic SIMD optimization may be used. This is not specifically limited in embodiments of this application.

(6) Computing engine: configured to specifically execute a computing task described in a computing graph, and process input data of the overall computing task into output data.

In some possible implementations, a procedure actually executed by the computing engine is as follows:

1. Allocate actual storage space to all data placeholders;
2. Receive input data of the overall computing task, and store the input data in actual storage space corresponding to the input placeholder;
3. Based on the dependency relationship of the computation graph, perform calculation from an operator that does not have a dependency, and store an intermediate result of operator calculation in actual storage space of an output placeholder of the corresponding operator, until all operators are calculated; and
4. Extract data from actual storage space corresponding to the overall output placeholder of the computing graph, and use the data as output data of the overall computing task.

It should be noted that a working procedure of the computing engine is merely an example for description, and a specific implementation of the computing engine is not specifically limited in this embodiment of this application.

FIG. 13 is a schematic flowchart of a data processing method 1300 according to an embodiment of this application. The method 1300 may be applied to the HLG architecture shown in FIG. 4, or may be applied to the HLG framework shown in FIG. 5. This is not limited in this embodiment of this application. In some possible implementations, the method 1300 may be performed by the HLG framework shown in FIG. 5. Specifically, the method 1300 includes the following steps.

S1310: Define an operand of all input data of a computing task.

For example, the operand of the input data may be defined by the "operand/placeholder allocation module" in the foregoing embodiment. It should be understood that all or some input operands of all subsequent operators are from the operands defined in this step.

S1320: Determine a higher order operator set for constructing the computing task.

For example, a higher order operator in the higher order operator set for constructing the computing task may be determined by the "operator assembly module" in the foregoing embodiment. Specifically, the operator assembly module uses, by using an operator assembly function, the operand selected from S1310 as an input operand of the operator, and generates a corresponding higher order operator with reference to an operator type. In some possible implementations, a higher order operator B is a dependency operator of a higher order operator A. After the operator assembly module is invoked to generate the higher order operator A, an output operand of the higher order operator A is used as one of input operands of the higher order operator B to assemble the higher order operator B. It should be understood that the output operand of the higher order operator is an operand newly allocated by the "operand/placeholder allocation module", and a placeholder of the output operand has no intersection set with placeholders of all operands of input data defined in S1310, and has no intersection set with an output placeholder of another allocated higher order operator.

S1330: Expand the higher order operator set into a basic operator set based on an operator expansion function.

For example, the expanding the higher order operator set into the basic operator set may be performed by the "operator expansion module" in the foregoing embodiment. Specifically, the operator expansion module expands each higher order operator into a corresponding basic operator set by using the operator expansion function. The following uses an example in which a first higher order operator in the higher order operator set is expanded into a first basic operator set to describe in detail module invoking involved in the expansion process. In some possible implementations, the first higher order operator is first expanded into a first second order operator set, and then each second order operator in the first second order operator set is expanded until all second order operators are expanded into basic operators. It should be noted that, in an expansion process, an operator assembly function is invoked to assemble the second order operator and the basic operator, that is, an input operand and an output operand of the second order operator and the basic operator are determined. According to the foregoing definition, a placeholder of an output operand of an operator does not intersect with a placeholder of an existing operand, that is, an output operand of each operator is a new output operand.

It should be noted that, in a process of expanding an operator into a next-order operator, a dependency relationship of the next-order operator has been defined in the operator expansion function. For example, an operator A is expanded into operators a1, a2, a3, and a4. In the expansion process, it may be determined, based on the operator expansion function, that a3 depends on a1 and a2. In the expansion process, the operator assembly function is invoked to generate a1 and a2 first, and then the operator assembly module is invoked to generate a3 based on the output operands of a1 and a2 and the operand of the input data defined in S1310. For example, the operator assembly module may alternatively combine output operands of the operators a1 and a2 into a new operand as an input operand of the operator a3. In some possible implementations, in a process in which the operator A is expanded into the operators a1 to a4, the operator a1 is not only a notification operator of the operator a3, but also a notification operator of the operator a4. In this case, in a process in which the operator assembly module generates the operators a3 and a4, an output operand of the operator a1 may be split into an output operand 1 and an output operand 2. Further, the output operand 1 of a1 is used as an input operand of the operator a3, and the output operand 2 of a1 is used as an input operand of the operator a4. It should be understood that, according to the description in the foregoing embodiment, splitting and merging of operands may be understood as splitting and merging of placeholder sets of operands. In some possible implementations, it should be further noted that dependency relationships between the operators a1, a2, and a3 may be damaged in a process of continuing to expand the operators a1, a2, and a3. Therefore, dependency relationship information of the basic operator set that is finally obtained through expansion needs to be determined by using S1340.

S1340: Determine the dependency relationship information of the basic operator set.

Specifically, the dependency relationship information of the basic operator set is a dependency relationship between the basic operators in the basic operator set. For example, the determining the dependency relationship information of the basic operator set is performed by the "operator dependency relationship determining module" in the foregoing embodiment.

In some possible implementations, if a computing task is represented by N higher order operators, the basic operator set is determined by expanding the N higher order operators. Specifically, the N higher order operators are expanded into corresponding N basic operator sets. To ensure that after the higher order operator is expanded into the basic operator set, a computing task represented by the basic operator set remains unchanged, an output placeholder of the higher order operator needs to be consistent with an output placeholder of the expanded basic operator set. For example, the first higher order operator set is expanded into the first basic operator set, and the dependency relationship information of the first basic operator set is determined by using the method 1000 or the method 1100 in the foregoing embodiment, to determine the output placeholder of the first basic operator set. When the output placeholder of the first basic operator set is inconsistent with the output placeholder of the first higher order operator, the output placeholder of the first basic operator set is updated to the output placeholder of the first higher order operator by using the "absorption" operation in the foregoing embodiment. Further, the dependency relationship information of the basic operator set is determined based on the N basic operator sets and the dependency relationship information of the N basic operator sets.

Further, when performing computation on data, the computing engine only needs to execute the computing graph including the basic operator set to obtain a computation result, and does not need to understand an invoking relationship between a higher order operator and a basic operator in an algebraic library.

Embodiments of this application provide a data processing method. The computing task is represented by using the basic operator and the dependency relationship between the basic operator and the basic operator, so that the computing engine can directly execute the basic operator to complete computing without depending on the computing task represented by an upper-layer higher order operator, thereby implementing decoupling between construction of the computing task based on the higher order operator and execution of the computing task. In this way, software and hardware engineers do not need to consider an invoking relationship between a higher order operator and a basic operator when optimizing a basic operator. In addition, because the computing graph represents a dependency relationship between the basic operators, and is irrelevant to a specific hardware platform for implementation, cross-hardware platform migration of an algorithm architecture can be implemented, so that heterogeneous acceleration of multiple hardware platforms can be supported, and a computing speed of data processing is further improved.

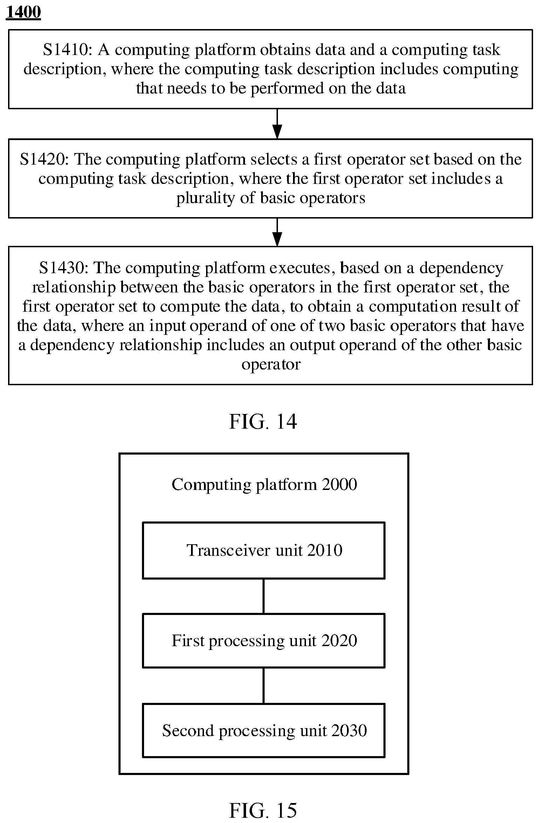

FIG. 14 is a schematic flowchart of a data processing method 1400 according to an embodiment of this application. The method 1400 may be applied to the HLG architecture shown in FIG. 4, or may be applied to the HLG framework shown in FIG. 5. This is not limited in this embodiment of this application. In some possible implementations, the method 1400 may be performed by the computing engine in the HLG framework shown in FIG. 5. Specifically, the method 1400 includes the following steps.

S1410: A computing platform obtains data and a computing task description, where the computing task description includes computing that needs to be performed on the data.

Specifically, the data may be ciphertext data, or may be plaintext data, or may be data mixed with plaintext and ciphertext. This is not specifically limited in this application.

S 1420: The computing platform selects a first operator set based on the computing task description, where the first operator set includes a plurality of basic operators.

For example, the first operator set may be obtained by expanding a higher order operator. For a specific process of obtaining the first operator set by expanding the higher order operator, refer to the description in the foregoing embodiment. Details are not described herein again.

It should be understood that a computing task represented by the first operator set is consistent with a computing task represented by a higher order operator before the first operator set is expanded.

S 1430: The computing platform executes, based on a dependency relationship between the basic operators in the first operator set, the first operator set to compute the data, to obtain a computation result of the data, where an input operand of one of two basic operators that have a dependency relationship includes an output operand of the other basic operator.

For example, the computing engine performs correlation computation on the data based on the plurality of basic operators in the first operator set and the dependency relationship between the plurality of basic operators. It should be understood that the dependency relationship between the plurality of basic operators in the first operator set is equivalent to the computing task description.

It should be noted that a placeholder of an operand in this application may be one placeholder, or may be a set including a plurality of placeholders. This is not specifically limited in this application.

It should be understood that an operator a has a dependency relationship with an operator b may mean that the operator b can be executed only after the operator a is executed. In other words, an output placeholder of the operator a intersects with an input placeholder of the operator b. It should be noted that the operator a may also be referred to as a dependent operator of the operator b, or the operator b is referred to as a notification operator of the operator a.

Further, the computing engine starts to perform computing from a basic operator that is in the first operator set and that does not have a dependency operator, until execution of all basic operators in the first operator set is completed, and obtains a computation result of the foregoing data.

More specifically, for a process of determining the dependency relationship between the basic operators in the first operator set, refer to the description in the foregoing embodiment. Details are not described herein again.

In the data processing method provided in this embodiment of this application, when executing a computing task, the computing engine may learn of an overall computing task by using a computing graph including the first operator set. Further, the computing engine may perform computing based on the computing graph from a basic operator that does not have a dependency operator, until all basic operators in the computing graph are executed, and computing is completed without relying on an upper-layer higher order operator. Therefore, construction of a computing task based on the higher order operator can be decoupled from execution of the computing task. In this way, software and hardware engineers do not need to consider an invoking relationship between a higher order operator and a basic operator when optimizing a basic operator. In addition, because the computing graph represents a dependency relationship between the basic operators of a computing task, and is irrelevant to a specific hardware platform for implementation, cross-hardware platform migration of an algorithm architecture can be implemented, so that heterogeneous acceleration of multiple hardware platforms can be supported, and a computing speed of ciphertext data processing is further improved.

It should be noted that the HLG framework-based data processing method and computing platform provided in embodiments of this application may be used for a fully homomorphic encryption algorithm, or may be used for another cryptographic algorithm, or may be used for another scenario. This is not specifically limited in embodiments of this application. The data processing method and the computing platform in embodiments of this application can be used provided that the computing task can support any splitting and combination of data, support expansion from a higher order operator to a lower order operator, and support a granularity of customized operator expansion, and control logic does not need to be considered. In some possible implementations, when the data processing method and the computing platform in embodiments of this application are used, correctness of implementation of a cryptographic algorithm needs to be verified, that is, logic of an original computing graph needs to be verified, and implementation of a single operator on a specific hardware platform needs to be verified. In some possible implementations, the HLG framework provided in embodiments of this application may further be used as a generation framework of a random white-box password or a code obfuscation solution, or may be used to describe a computing graph of a symmetric cryptographic algorithm such as AES. This is not limited in embodiments of this application.

FIG. 15 is a schematic block diagram of a computing platform according to an embodiment of this application. The computing platform 2000 includes a transceiver unit 2010, a first processing unit 2020, and a second processing unit 2030. The transceiver unit 2010 may implement a corresponding communication function, and the first processing unit 2020 and the second processing unit 2030 are configured to perform data processing.

Optionally, the computing platform 2000 may further include a storage unit. The storage unit may be configured to store instructions and/or data. The processing unit 2020 may read the instructions and/or the data in the storage unit, so that the apparatus implements the foregoing method embodiment.

The computing platform 2000 may include units configured to perform the method in FIG. 14. In addition, the units in the computing platform 2000 and the foregoing other operations and/or functions are respectively used to implement corresponding procedures of the method embodiment in FIG. 14.

When the computing platform 2000 is configured to perform the method 1400 in FIG. 14, the transceiver unit 2010 may be configured to perform S1410 in the method 700, the first processing unit 2020 may be configured to perform S 1420 in the method 1400, and the second processing unit 2030 may be configured to perform S1430 in the method 1400.

Specifically, the apparatus includes: the transceiver unit 2010, configured to obtain data and a computing task description, where the computing task description includes computing that needs to be performed on the data; the first processing unit 2020, configured to select a first operator set based on the computing task description, where the first operator set includes a plurality of basic operators; and the second processing unit 2030, configured to execute, based on a dependency relationship between the basic operators in the first operator set, the first operator set to compute the data, to obtain a computation result of the data, where a placeholder of an input operand of one of two basic operators that have the dependency relationship intersects with a placeholder of an output operand of another basic operator.

In some possible implementations, the second processing unit 2030 is further configured to: determine a first basic operator in the first operator set based on the dependency relationship between the basic operators in the first operator set, where the first basic operator is a basic operator whose intersection set between an input placeholder and an output placeholder of any basic operator in the first operator set is empty; store the data in storage space corresponding to an input placeholder set of the first basic operator; and execute the first basic operator on the data, and execute, based on the dependency relationship between the basic operators in the first operator set, a basic operator in the first operator set other than the first basic operator.

In some possible implementations, the first operator set and the dependency relationship between the basic operators in the first operator set are determined based on N basic operator sets. The N basic operator sets are in a one-to-one correspondence with N higher order operators, and the computing on the data can be implemented by using the N higher order operators. A first basic operator set is obtained by expanding a first higher order operator, the first higher order operator is any higher order operator in the N higher order operators, and the first basic operator set is a basic operator set that is in the N basic operator sets and that corresponds to the first higher order operator. An output placeholder of the first basic operator set is the same as an output placeholder of the first higher order operator.

In some possible implementations, the N basic operator sets are in a one-to-one correspondence with N pieces of dependency relationship information, and the N pieces of dependency relationship information indicates a dependency relationship between the basic operators in the corresponding basic operator set. The first operator set and the dependency relationship between the basic operators in the first operator set are obtained in the following manner: determining target dependency relationship information based on the N pieces of dependency relationship information, where the target dependency relationship information indicates a dependency relationship of each basic operator in the plurality of basic operators; and determining the first operator set based on the target dependency relationship information and basic operators included in the N basic operator sets, where the target dependency relationship information is the dependency relationship between the basic operators in the first operator set.

In some possible implementations, the output placeholder of the first basic operator set is the same as the output placeholder of the first higher order operator through an absorption operation, and the absorption operation includes: determining the output placeholder of the first basic operator set based on first dependency relationship information, where the first dependency relationship information indicates the dependency relationship between the basic operators in the first basic operator set; determining whether the output placeholder of the first basic operator set is the same as the output placeholder of the first higher order operator; and if the output placeholder of the first basic operator set is different from the output placeholder of the first higher order operator, enabling a pointer of an output operand of the first basic operator set to the output placeholder of the first higher order operator, and updating second identification information to first identification information, where the first identification information is identification information of the output operand of the first basic operator set, and the second identification information is identification information of an output operand of the first higher order operator.

In some possible implementations, the absorption operation further includes: after the second identification information is updated to the first identification information, when a pointer of the output operand of the first higher order operator is accessed by a pointer synchronizer, determining whether identification information of the pointer synchronizer is equal to the second identification information; and when the identification information of the pointer synchronizer is not equal to the second identification information, updating a pointer of the pointer synchronizer to the pointer of the output operand of the first basic operator set, and updating the identification information of the pointer synchronizer to the second identification information.

In some possible implementations, the dependency relationship between the basic operators in the first basic operator set is determined in the following manner: determining whether an input placeholder of a second basic operator intersects with at least one output placeholder in a first output placeholder set, where the first output placeholder set includes output placeholders of all basic operators in the first basic operator set, and the second basic operator is any basic operator in the first basic operator set; and if the input placeholder of the second basic operator intersects with the at least one output placeholder in the first output placeholder set, determining that a dependency relationship exists between a basic operator corresponding to the at least one output placeholder and the second basic operator.

In some possible implementations, an output placeholder of a first operator is determined based on an input operand of the first operator and a type of the first operator, the first operator is any operator obtained in a process of expanding the first higher order operator, and an intersection set between the output placeholder of the first operator and an allocated output placeholder is empty.

The transceiver unit 2010, the first processing unit 2020, and the second processing unit 2030 in FIG. 15 may be implemented by one computer device, or may be implemented by a plurality of computer devices. More specifically, the processing unit may be implemented by at least one processor or a processor-related circuit, the transceiver unit may be implemented by a transceiver or a transceiver-related circuit, and the storage unit may be implemented by using at least one memory.

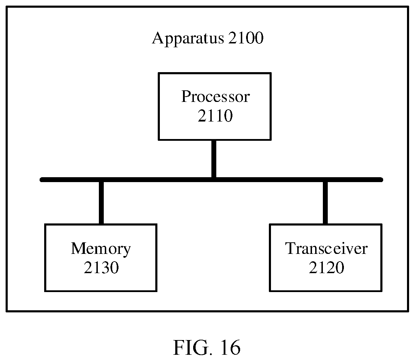

FIG. 16 is a schematic block diagram of a data processing apparatus according to an embodiment of this application. The data processing apparatus 2100 shown in FIG. 16 may include a processor 2110, a transceiver 2120, and a memory 2130. The processor 2110, the transceiver 2120, and the memory 2130 are connected by using an internal connection path. The memory 2130 is configured to store instructions. The processor 2110 is configured to execute the instructions stored in the memory 2130, so that the transceiver 2130 receives/sends some parameters. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface), to implement communication between the communication device 2100 and another device or a communication network.

In an implementation process, the steps of the foregoing methods may be implemented by using an integrated logic circuit of hardware in the processor 2110, or by using instructions in a form of software. The method of the communication disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 2130, and the processor 2110 reads information in the memory 2130 and completes the steps of the foregoing method in combination with the hardware of the processor 2110. To avoid repetition, details are not described herein again.

It should also be understood that in embodiments of this application, the memory may include a read-only memory and a random access memory, and provide instructions and data to the processor. A part of the processor may further include a non-volatile random access memory. For example, the processor may further store information of a device type.

An embodiment of this application further provides a computer-readable storage medium, where the computer-readable storage medium stores program code, and when the computer program code is run on a computer, the computer is enabled to perform the method in FIG. 14.

An embodiment of this application further provides a chip, including at least one processor and a memory. The at least one processor is coupled to the memory, and is configured to read and execute instructions in the memory, to perform the method in FIG. 14.

All aspects, embodiments, or features are presented in this application based on a system that includes a plurality of devices, components, and modules. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "for example" and "such as" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "corresponding (corresponding, relevant)" and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement that can be readily figured out by the person skilled in the art within the technical scope disclosed in this application shall fall within the protection scope of this application. Therefore, the protection scope of this application shall be subject to the protection scope of the claims.

**Claims**

1. A data processing method, comprising:

   obtaining, by a computing platform, data and a computing task description, wherein the computing task description comprises computing that needs to be performed on the data;
   selecting, by the computing platform, a first operator set based on the computing task description, wherein the first operator set comprises a plurality of basic operators; and
   executing, by the computing platform based on a dependency relationship between the basic operators in the first operator set, the first operator set to compute the data, to obtain a computation result of the data, wherein a placeholder of an input operand of one of two basic operators that have the dependency relationship intersects with a placeholder of an output operand of another basic operator.

2. The method according to claim 1, wherein the executing, by the computing platform based on a dependency relationship between the basic operators in the first operator set, the first operator set to compute the data comprises:

   determining, by the computing platform, a first basic operator in the first operator set based on the dependency relationship between the basic operators in the first operator set, wherein the first basic operator is a basic operator whose intersection set between an input placeholder and an output placeholder of any basic operator in the first operator set is empty;
   storing, by the computing platform, the data in storage space corresponding to an input placeholder set of the first basic operator; and
   executing, by the computing platform, the first basic operator on the data, and executing, based on the dependency relationship between the basic operators in the first operator set, a basic operator in the first operator set other than the first basic operator.

3. The method according to claim 1 or 2, wherein the first operator set and the dependency relationship between the basic operators in the first operator set are determined based on N basic operator sets, the N basic operator sets are in a one-to-one correspondence with N higher order operators, and the computing on the data can be implemented by using the N higher order operators;

   a first basic operator set is obtained by expanding a first higher order operator, the first higher order operator is any higher order operator in the N higher order operators, and the first basic operator set is a basic operator set that is in the N basic operator sets and that corresponds to the first higher order operator; and
   an output placeholder of the first basic operator set is the same as an output placeholder of the first higher order operator.

4. The method according to claim 3, wherein the N basic operator sets are in a one-to-one correspondence with N pieces of dependency relationship information, and the N pieces of dependency relationship information indicate a dependency relationship between basic operators in the corresponding basic operator set; and
   the first operator set and the dependency relationship between the basic operators in the first operator set are obtained in the following manner:

   determining target dependency relationship information based on the N pieces of dependency relationship information, wherein the target dependency relationship information indicates a dependency relationship between the plurality of basic operators; and
   determining the first operator set based on the target dependency relationship information and basic operators comprised in the N basic operator sets, wherein the target dependency relationship information is the dependency relationship between the basic operators in the first operator set.

5. The method according to claim 3 or 4, wherein the output placeholder of the first basic operator set is the same as the output placeholder of the first higher order operator through an absorption operation, and the absorption operation comprises:

   determining the output placeholder of the first basic operator set based on first dependency relationship information, wherein the first dependency relationship information indicates a dependency relationship between basic operators in the first basic operator set;
   determining whether the output placeholder of the first basic operator set is the same as the output placeholder of the first higher order operator; and

if the output placeholder of the first basic operator set is different from the output placeholder of the first higher order operator, enabling a pointer of an output operand of the first basic operator set to point to the output placeholder of the first higher order operator, and updating second identification information to first identification information, wherein the first identification information is identification information of the output operand of the first basic operator set, and the second identification information is identification information of an output operand of the first higher order operator.

6. The method according to claim 5, wherein the absorption operation further comprises:

after the second identification information is updated to the first identification information, when a pointer of the output operand of the first higher order operator is accessed by a pointer synchronizer, determining whether identification information of the pointer synchronizer is equal to the second identification information; and when the identification information of the pointer synchronizer is not equal to the second identification information, updating a pointer of the pointer synchronizer to the pointer of the output operand of the first basic operator set, and updating the identification information of the pointer synchronizer to the second identification information.

7. The method according to any one of claims 3 to 6, wherein the dependency relationship between the basic operators in the first basic operator set is determined in the following manner:

determining whether an input placeholder of a second basic operator intersects with at least one output placeholder in a first output placeholder set, wherein the first output placeholder set comprises output placeholders of all basic operators in the first basic operator set, and the second basic operator is any basic operator in the first basic operator set; and

if the input placeholder of the second basic operator intersects with the at least one output placeholder in the first output placeholder set, determining that a dependency relationship exists between a basic operator corresponding to the at least one output placeholder and the second basic operator.

8. The method according to any one of claims 3 to 7, wherein an output placeholder of a first operator is determined based on an input operand of the first operator and a type of the first operator, the first operator is any operator obtained in a process of expanding the first higher order operator, and an intersection set between the output placeholder of the first operator and an allocated output placeholder is empty.

9. A computing platform, comprising:

a transceiver unit, configured to obtain data and a computing task description, wherein the computing task description comprises computing that needs to be performed on the data;

a first processing unit, configured to select a first operator set based on the computing task description, wherein the first operator set comprises a plurality of basic operators; and

a second processing unit, configured to: execute, based on a dependency relationship between the basic operators in the first operator set, the first operator set to compute the data, to obtain a computation result of the data, wherein a placeholder of an input operand of one of two basic operators that have the dependency relationship intersects with a placeholder of an output operand of another basic operator.

10. The computing platform according to claim 9, wherein that the second processing unit executes, based on a dependency relationship between the basic operators in the first operator set, the first operator set to compute the data is specifically:

determining a first basic operator in the first operator set based on the dependency relationship between the basic operators in the first operator set, wherein the first basic operator is a basic operator whose intersection set between an input placeholder and an output placeholder of any basic operator in the first operator set is empty; storing the data in storage space corresponding to an input placeholder set of the first basic operator; and executing the first basic operator on the data, and executing, based on the dependency relationship between the basic operators in the first operator set, a basic operator in the first operator set other than the first basic operator.

11. The computing platform according to claim 9 or 10, wherein the first operator set and the dependency relationship between the basic operators in the first operator set are determined based on N basic operator sets, the N basic operator sets are in a one-to-one correspondence with N higher order operators, and the computing on the data can be implemented by using the N higher order operators;

a first basic operator set is obtained by expanding a first higher order operator, the first higher order operator is any higher order operator in the N higher order operators, and the first basic operator set is a basic operator set that is in the N basic operator sets and that corresponds to the first higher order operator; and
an output placeholder of the first basic operator set is the same as an output placeholder of the first higher order operator.

12. The computing platform according to claim 11, wherein the N basic operator sets are in a one-to-one correspondence with N pieces of dependency relationship information, and the N pieces of dependency relationship information indicate a dependency relationship between basic operators in the corresponding basic operator set; and
the first operator set and the dependency relationship between the basic operators in the first operator set are obtained in the following manner:

determining target dependency relationship information based on the N pieces of dependency relationship information, wherein the target dependency relationship information indicates a dependency relationship between the plurality of basic operators; and
determining the first operator set based on the target dependency relationship information and basic operators comprised in the N basic operator sets, wherein the target dependency relationship information is the dependency relationship between the basic operators in the first operator set.

13. The computing platform according to claim 11 or 12, wherein the output placeholder of the first basic operator set is the same as the output placeholder of the first higher order operator through an absorption operation, and the absorption operation comprises:

determining the output placeholder of the first basic operator set based on first dependency relationship information, wherein the first dependency relationship information indicates a dependency relationship between basic operators in the first basic operator set;
determining whether the output placeholder of the first basic operator set is the same as the output placeholder of the first higher order operator; and
if the output placeholder of the first basic operator set is different from the output placeholder of the first higher order operator, enabling a pointer of an output operand of the first basic operator set to point to the output placeholder of the first higher order operator, and updating second identification information to first identification information, wherein the first identification information is identification information of the output operand of the first basic operator set, and the second identification information is identification information of an output operand of the first higher order operator.

14. The computing platform according to claim 13, wherein the absorption operation further comprises:
after the second identification information is updated to the first identification information, when a pointer of the output operand of the first higher order operator is accessed by a pointer synchronizer, determining whether identification information of the pointer synchronizer is equal to the second identification information; and when the identification information of the pointer synchronizer is not equal to the second identification information, updating a pointer of the pointer synchronizer to the pointer of the output operand of the first basic operator set, and updating the identification information of the pointer synchronizer to the second identification information.

15. The computing platform according to any one of claims 11 to 14, wherein the dependency relationship between the basic operators in the first basic operator set is determined in the following manner:

determining whether an input placeholder of a second basic operator intersects with at least one output placeholder in a first output placeholder set, wherein the first output placeholder set comprises output placeholders of all basic operators in the first basic operator set, and the second basic operator is any basic operator in the first basic operator set; and
if the input placeholder of the second basic operator intersects with the at least one output placeholder in the first output placeholder set, determining that a dependency relationship exists between a basic operator corresponding to the at least one output placeholder and the second basic operator.

16. The computing platform according to any one of claims 11 to 15, wherein an output placeholder of a first operator is determined based on an input operand of the first operator and a type of the first operator, the first operator is any operator obtained in a process of expanding the first higher order operator, and an intersection set between the output placeholder of the first operator and an allocated output placeholder is empty.

17. A computer-readable storage medium, wherein the computer storage medium stores a computer program, and when the computer program is executed by a computer, the method according to any one of claims 1 to 8 is implemented.

Cloud 100

| Application management module 101 | ⟺ | Data storage module 103 |

Data processing module 102

Key management and authentication module 104

Secure path

User end 200

Encryption module 210

Decryption module 220

FIG. 1

FIG. 2

FIG. 3

| CKKS | BGV | BFV | HLG homomorphic encryption algorithm library |

| Advanced operator 1 | Advanced operator 2 | Advanced operator 3 | HLG extension component Homomorphic encryption operator |

Polynomial operation — HLG extension component Basic algebraic structure and operator

HLG basic framework

Easy-to-use algebraic expression interface → Automatic operator expansion

Computing graph generation and conversion ← Graph optimization

HLG algebraic framework Optimization for an abstract computing graph

| x86 CPU Computing engine | GPU Computing engine | FPGA Computing engine | Computing engines of different hardware platforms |

FIG. 4

FIG. 5

EP 4 432 149 A1

FIG. 6A

EP 4 432 149 A1

CONT.
FROM
FIG. 6A
~

Operand w → D → Operand b

Operator
expansion

Placeholder b

Operand w1 → $D_2$ → Operand u → $D_3$ → Operand a

Operand w2 → $D_1$ → Operand t

CONT.
FROM
FIG. 6A

CONT.
FROM
FIG. 6A
~

$D_3$

Pointer/Reference 4

Operand b

Operand a

Pointer/Reference 5

Placeholder b

Pointer/Reference 6

Pointer/Reference 1

Pointer/Reference 2

Pointer/Reference 3

FIG. 6B

**600**

S601: Enable a first operand to point to a second placeholder set of a second operand

↓

S602: Update a hash value of the second operand to a hash value of the first operand

↓

S603: During next access, refresh a pointer that points to the second operand to a pointer that points to the first operand

FIG. 7

**700**

S701  Invoke a pointer access interface of a pointer synchronizer

↓

S702  Whether a hash value of the pointer synchronizer is equal to a target hash value

No ↓          Yes →

S703  Update a pointer of the pointer synchronizer to a target pointer, and update the hash value of the pointer synchronizer to the target hash value

↓

S704  Return the pointer of the pointer synchronizer

FIG. 8

Initial state ——————————— $\widetilde{}$ TO
FIG. 9B

```
Wrapper → PtrSyncerPtr 1 →

Input_slot → PtrSyncerPtr 1 →     Pointer
                                  synchronizer

clist_slot → PtrSyncerPtr 1 →     Ptr_a

Child_slot                        Hash_a
```

Operand a → Hash_a

Placeholder a

```
Wrapper

Input_slot → PtrSyncerPtr 2 →     Pointer
                                  synchronizer

clist_slot → PtrSyncerPtr 2 →     Ptr_b

Child_slot → PtrSyncerPtr 2 →     Hash_b
```

Operand b → Hash_b

Placeholder b

FIG. 9A

CONT.
FROM
FIG. 9A
~

"Absorption" execution process

~
TO
FIG. 9C

Wrapper → PtrSyncerPtr 1

Input_slot → PtrSyncerPtr 1

clist_slot → PtrSyncerPtr 1

Child_slot

Pointer synchronizer
Ptr_a
Hash_a

Operand a

Hash_a

Placeholder b

Wrapper

Input_slot → PtrSyncerPtr 2

clist_slot → PtrSyncerPtr 2

Child_slot → PtrSyncerPtr 2

Pointer synchronizer
Ptr_b
Hash_b

Operand b

FIG. 9B

Pointer synchronization process

CONT.
FROM
FIG. 9B
~

Wrapper → PtrSyncerPtr 1

Input_slot → PtrSyncerPtr 1

clist_slot → PtrSyncerPtr 1

Child_slot

Pointer synchronizer

Ptr_a

Hash_a

Operand a

Hash_a

Placeholder b

Wrapper

Input_slot → PtrSyncerPtr 2

clist_slot → PtrSyncerPtr 2

Child_slot → PtrSyncerPtr 2

Pointer synchronizer

Ptr_a

Hash_a

Operand b

FIG. 9C

FIG. 10

**1000**

S1010: Input a target placeholder ph = [ph.x, ph.y) and a comparison placeholder set {$ph_i$}, where $ph_i$ = [$ph_i$.x, $ph_i$.y), and i = 0, ..., n − 1

S1020: Determine a minimum subscript L that meets $ph_L$.y > ph.x

S1030: Determine a minimum subscript R that meets $ph_R$.x ≥ ph.y

S1040: Determine a first output placeholder set {$ph_j$, j∈[L, R)}

FIG. 11

**1100**

S1110: Input a target placeholder ph and a comparison placeholder set $\{ph_i\}$, where $i = 0, ..., n - 1$

S1120: For $j = 0, ..., n - 1$, determine $ph_j$ whose intersection set with ph is not empty

S1130: Determine a first output placeholder set $\{ph_j\}$

FIG. 12

**1300**

S1310: Define an operand of all input data of a computing task

S1320: Determine a higher order operator set for constructing the computing task

S1330: Expand the higher order operator set into a basic operator set based on an operator expansion function

S1340: Determine dependency relationship information of the basic operator set

FIG. 13

**1400**

S1410: A computing platform obtains data and a computing task description, where the computing task description includes computing that needs to be performed on the data

↓

S1420: The computing platform selects a first operator set based on the computing task description, where the first operator set includes a plurality of basic operators

↓

S1430: The computing platform executes, based on a dependency relationship between the basic operators in the first operator set, the first operator set to compute the data, to obtain a computation result of the data, where an input operand of one of two basic operators that have a dependency relationship includes an output operand of the other basic operator

FIG. 14

Computing platform 2000

Transceiver unit 2010

First processing unit 2020

Second processing unit 2030

FIG. 15

Apparatus 2100

Processor
2110

Memory
2130

Transceiver
2120

FIG. 16

## INTERNATIONAL SEARCH REPORT

| International application No. |
| --- |
| **PCT/CN2022/134250** |

| A. | CLASSIFICATION OF SUBJECT MATTER |
| --- | --- |
| | G06F 21/60(2013.01)i |

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 算子, 依赖, 任务, 描述, operator, dependency, task, description

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112381211 A (XIDIAN UNIVERSITY) 19 February 2021 (2021-02-19) description, paragraphs 0035-0078 | 1-17 |
| A | CN 110888720 A (BEIJING BAIDU NETCOM SCIENCE AND TECHNOLOGY CO., LTD.) 17 March 2020 (2020-03-17) entire document | 1-17 |
| A | CN 112947933 A (SHANGHAI SHANGTANG INTELLIGENT TECHNOLOGY CO., LTD.) 11 June 2021 (2021-06-11) entire document | 1-17 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **09 January 2023** | **18 January 2023** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/134250**

| Patent document cited in search report | | | Publication date (day/month/year) | Patent family member(s) | Publication date (day/month/year) |
|---|---|---|---|---|---|
| CN | 112381211 | A | 19 February 2021 | None | |
| CN | 110888720 | A | 17 March 2020 | None | |
| CN | 112947933 | A | 11 June 2021 | None | |

Form PCT/ISA/210 (patent family annex) (January 2015)

**EP 4 432 149 A1**

## REFERENCES CITED IN THE DESCRIPTION

**Patent documents cited in the description**

- CN 202111681763